(19) Europäisches Patentamt
European Patent Office
Office européen des brevets

(11) **EP 4 718 832 A1**

(12) **EUROPEAN PATENT APPLICATION**

(43) Date of publication:
**01.04.2026 Bulletin 2026/14**

(21) Application number: **25161042.4**

(22) Date of filing: **28.02.2025**

(51) International Patent Classification (IPC):
**H04N 1/19** (2006.01)      **G03G 15/043** (2006.01)
**G03G 15/00** (2006.01)

(52) Cooperative Patent Classification (CPC):
**H04N 1/19**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.09.2024 JP 2024167051**

(71) Applicant: **Fujifilm Business Innovation Corp.
Tokyo 107-0052 (JP)**

(72) Inventor: **INOUE, Michihiro
Ebina (JP)**

(74) Representative: **Meissner Bolte Partnerschaft
mbB
Patentanwälte Rechtsanwälte
Postfach 86 06 24
81633 München (DE)**

Remarks:
Amended claims in accordance with Rule 137(2)
EPC.

(54) **OPTICAL SCANNING DEVICE AND IMAGE FORMING APPARATUS**

(57)     An optical scanning device includes: a scanner that includes multiple light-emitting element sets, the multiple light-emitting element sets being arranged in a main scanning direction so as to face a subject to be scanned and being each constituted by multiple light-emitting elements arranged in the main scanning direction, and that scans the subject by causing each of the multiple light-emitting element sets to emit light based on image information; a driver that drives each of the multiple light-emitting element sets for each scanning period; and a discard-current generator that generates a discard current which is to flow from the driver during a non-scanning period which is set between the scanning periods, the discard current being different from a current to flow to each of the multiple light-emitting element sets, and that also controls the generated discard current.

**Description**

Background

(i) Technical Field

The present disclosure relates to an optical scanning device and an image forming apparatus.

(ii) Related Art

Hitherto, as optical scanning technologies, the following known technologies, for example, have been proposed.

The optical scanning device disclosed in Japanese Unexamined Patent Application Publication No. 2015-074195 includes a power consumer. This power consumer causes a light-emitting element set to consume power, which corresponds to power consumed for light-emitting operations of the light-emitting element set, during a non-write period between scanning periods for which the light-emitting element set repeatedly performs scanning.

The exposure device disclosed in Japanese Unexamined Patent Application Publication No. 2013-52650 includes a correction unit. This correction unit corrects the light amount of a target light-emitting element among multiple light-emitting elements in accordance with correction information stored in a storage when a condition corresponding to a use condition different from a specific use condition is satisfied. In this exposure device, if the scanning speed is different from that when the light amount is corrected, a correction value for the light amount is recalculated based on a calculation expression. This reduces the deterioration of the image quality (the occurrence of streaky portions in the image). However, the variations in the power supply voltage still remain high, so that the variations in the light amounts of light-emitting elements caused by the differences in the light-emitting conditions are not reduced.

The image forming apparatus disclosed in Japanese Unexamined Patent Application Publication No. 2003-182141 includes a setter. This setter transfers a transfer signal generated by a transfer signal generator to a predetermined self-scanning light-emitting device (LED) chip of an image recording head for a preset time and sets the operating time of the transfer signal generator so that the temperature of the image recording head is contained within a predetermined range.

The exposure device disclosed in Japanese Unexamined Patent Application Publication No. 2008-093896 includes multiple light-emitting element array members and a driver. The light-emitting element array members each includes multiple light-emitting elements arranged linearly. The driver transfers a signal, which is used for sequentially turning ON the multiple light-emitting elements arranged in each of the light-emitting element array members, in the arranging direction of the light-emitting elements in a predetermined transfer period. The driver is configured to change this transfer period.

Summary

It is an object of the present disclosure to provide an optical scanning device and an image forming apparatus that can reduce light amount irregularities caused by variations in a drive voltage, compared with the configuration in which a discard-current generator that generates a current to be discarded and also controls this current is not provided.

According to a first aspect of the present disclosure, there is provided an optical scanning device including: a scanner that includes multiple light-emitting element sets, the multiple light-emitting element sets being arranged in a main scanning direction so as to face a subject to be scanned and being each constituted by multiple light-emitting elements arranged in the main scanning direction, and that scans the subject by causing each of the multiple light-emitting element sets to emit light based on image information; a driver that drives each of the multiple light-emitting element sets for each scanning period; and a discard-current generator that generates a discard current which is to flow from the driver during a non-scanning period which is set between the scanning periods, the discard current being different from a current to flow to each of the multiple light-emitting element sets, and that also controls the generated discard current.

According to a second aspect of the present disclosure, in the optical scanning device according to the first aspect, the discard-current generator may include a switcher that performs a switching operation to selectively cause the discard-current generator to generate the discard current or not to generate the discard current.

According to a third aspect of the present disclosure, in the optical scanning device according to the second aspect, the switcher may perform the switching operation for the discard-current generator during the scanning periods positioned before and after the non-scanning period.

According to a fourth aspect of the present disclosure, in the optical scanning device according to the third aspect, the switcher may change a timing at which the switching operation for the discard-current generator is performed, in accordance with the image information used for scanning the subject in the scanning period immediately before the non-scanning period.

According to a fifth aspect of the present disclosure, in the optical scanning device according to the fourth aspect, the image information may include at least one of information on a light amount of the multiple light-emitting elements of each of the multiple light-emitting element sets and information on a light-emission ratio of the multiple light-emitting elements of each of the multiple light-emitting element sets.

According to a sixth aspect of the present disclosure, in the optical scanning device according to the fifth aspect, the switcher may calculate a flowing time of the discard current by multiplying a basic ON time of the discard current by a certain coefficient.

According to a seventh aspect of the present disclosure, in the optical scanning device according to the first aspect, the discard-current generator may include a setter that sets a value of the discard current.

According to an eighth aspect of the present disclosure, in the optical scanning device according to the seventh aspect, the setter may set the value of the discard current in accordance with the image information used for scanning the subject in the scanning period immediately before the non-scanning period.

According to a ninth aspect of the present disclosure, in the optical scanning device according to the eighth aspect, the image information may include at least one of information on a light amount of the multiple light-emitting elements of each of the multiple light-emitting element sets and information on a light-emission ratio of the multiple light-emitting elements of each of the multiple light-emitting element sets.

According to a tenth aspect of the present disclosure, in the optical scanning device according to the ninth aspect, the setter may change the value of the discard current in accordance with a cumulative value of at least one of the light amount and the light-emission ratio of the multiple light-emitting elements of each of the multiple light-emitting element sets.

According to an eleventh aspect of the present disclosure, there is provided an image forming apparatus including an image carrier and an exposure device that exposes the image carrier to light based on image information. The optical scanning device according to one of the first through tenth aspects is used as the exposure device.

According to the first aspect of the present disclosure, the light amount irregularities caused by variations in a drive voltage can be reduced, compared with the configuration in which a discard-current generator that generates a discard current and also controls the discard current is not provided.

According to the second aspect of the present disclosure, it is possible to handle a delay for the flowing timing of a discard current, compared with the configuration in which the discard-current generator does not include a switcher that performs a switching operation to selectively cause the discard-current generator to generate the discard current or not to generate the discard current.

According to the third aspect of the present disclosure, a certain amount of discard current can flow during the entire non-scanning period, compared with the configuration in which the switcher does not perform the switching operation during scanning periods positioned before and after a non-scanning period.

According to the fourth aspect of the present disclosure, the influence of variations in the drive voltage can further be reduced, compared with the configuration in which the switcher does not change the timing at which the switching operation is performed in accordance with the image information used for scanning the subject in the scanning period immediately before the non-scanning period.

According to the fifth aspect of the present disclosure, the influence of variations in the drive voltage caused by image information can further be reduced, compared with the configuration in which the image information includes neither of information on the light amount of the light-emitting elements of each of the light-emitting element sets nor information on the light-emission ratio of the light-emitting elements of each of the light-emitting element sets.

According to the sixth aspect of the present disclosure, the influence of variations in the drive voltage caused by image information can further be reduced, compared with the configuration in which the switcher sets a fixed timing at which the switching operation is performed.

According to the seventh aspect of the present disclosure, variations in the drive voltage can reliably be reduced, compared with the configuration in which the discard-current generator sets a fixed value of the discard current.

According to the eighth aspect of the present disclosure, the influence of variations in the drive voltage caused by image information can further be reduced, compared with the configuration in which the setter sets a fixed value of the discard current regardless of the content of the image information in the scanning period immediately before the non-scanning period.

According to the ninth aspect of the present disclosure, the influence of variations in the drive voltage caused by image information can further be reduced, compared with the configuration in which the image information includes neither of information on the light amount of the light-emitting elements of each of the light-emitting element sets nor information on the light-emission ratio of the light-emitting elements of each of the light-emitting element sets.

According to the tenth aspect of the present disclosure, the influence of variations in the drive voltage caused by image information can further be reduced, compared with the configuration in which the setter sets a fixed value of the discard current regardless of the value of the light amount or the light-emission ratio of the light-emitting elements of each of the light-emitting element sets.

According to the eleventh aspect of the present disclosure, the light amount irregularities caused by variations in a drive voltage can be reduced, compared with the configuration in which a discard-current generator that generates a discard current and also controls the discard current is not provided.

Brief Description of the Drawings

An exemplary embodiment of the present disclosure will be described in detail based on the following figures, wherein:

Fig. 1 is a schematic view illustrating the overall image forming apparatus utilizing an example of an optical scanning device of the exemplary embodiment of the disclosure;
Fig. 2 is a schematic sectional view of a light-emitting device (LED) print head, which is an example of the optical scanning device of the exemplary embodiment;
Fig. 3 is a schematic view of an LED circuit substrate in the exemplary embodiment;
Fig. 4 is a schematic view illustrating the arrangement state of LEDs of a self-scanning light-emitting device (SLED) chip;
Figs. 5A and 5B illustrate the exposure state of a photoconductor drum resulting from a scanning operation of the LED print head;
Fig. 6 is an equivalent circuit diagram of the SLED chip;
Fig. 7 is a circuit diagram of a transfer thyristor;
Fig. 8 is a timing chart of the drive state of the SLED chip;
Fig. 9 is a timing chart of the drive state of the SLED chip;
Fig. 10 is a block diagram of a signal generating circuit;
Fig. 11A illustrates the arrangement of elements of the SLED chip;
Fig. 11B is a wiring diagram illustrating the connection between the signal generating circuit and the SLED chips;
Figs. 12A and 12B are graphs illustrating adjustments of the exposure amount in the SLED chip;
Fig. 13A illustrates scanning periods and a non-write period of a known optical scanning device;
Fig. 13B is a timing chart of scanning periods and break periods of a known optical scanning device;
Fig. 14 is a schematic view illustrating an image defect occurring in a known optical scanning device;
Fig. 15 is a block diagram illustrating the major part of the signal generating circuit;
Fig. 16 is a timing chart of a discard current;
Fig. 17 is a circuit diagram of a discard-current control circuit;
Fig. 18 is a table illustrating parameters for controlling a discard current; and
Figs. 19A, 19B, and 19C illustrate measurement results of an example.

Detailed Description

An exemplary embodiment of the disclosure will be described below with reference to the accompanying drawings.

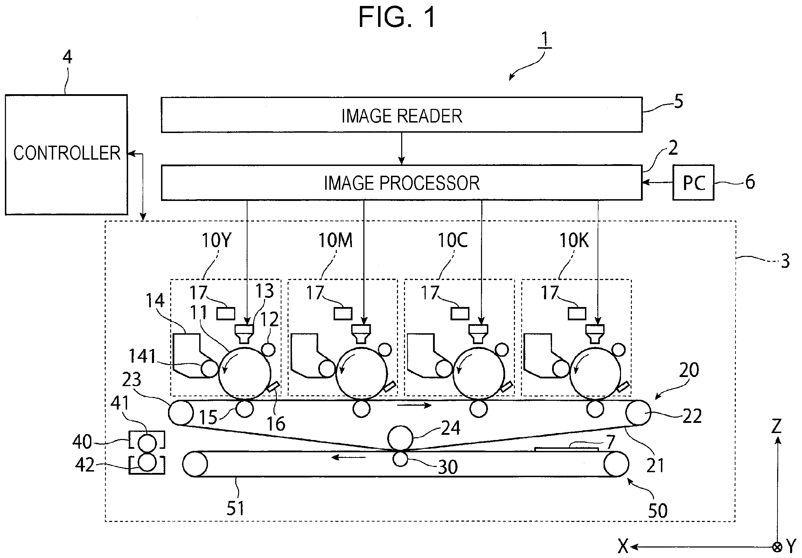

Fig. 1 is a schematic view illustrating the overall image forming apparatus 1 utilizing an optical scanning device of an exemplary embodiment of the disclosure. In Fig. 1, X indicates the horizontal direction of the image forming apparatus 1, Y indicates the depth direction of the image forming apparatus 1, and Z indicates the vertical direction of the image forming apparatus 1.

(Overall Configuration of Image Forming Apparatus)

The image forming apparatus 1 according to the exemplary embodiment is constituted by a so-called tandem color printer, for example. As illustrated in Fig 1, the image forming apparatus 1 largely includes an image processor 2, an image former 3, and a controller 4. The image forming apparatus 1 is connected to external devices, such as an image reader 5 and a personal computer (PC) 6. The image forming apparatus 1 may integrally include the image reader 5 at a certain position, such as on the top of the image forming apparatus 1. The image processor 2 executes certain image processing on image data (image information) input from an external device, such as the image reader 5 or the PC 6. The image former 3 forms an image in accordance with image data of the individual colors subjected to image processing in the image processor 2. The controller 4 obtains various items of information on the operation state of the image forming apparatus 1 and centrally controls the operation of the image forming apparatus 1.

The image former 3 includes multiple image forming units 10, an intermediate transfer device 20, a sheet transport device 50, and a fixing device 40, for example. The image forming units 10 form toner images that are developed with toner. The toner forms a developer. The intermediate transfer device 20 holds toner images formed in the image forming units 10 and transports them to a second transfer position at which the toner images are transferred to a recording sheet 7, which is an example of a recording medium. The sheet transport device 50 transports a recording sheet 7 to the second transfer position of the intermediate transfer device 20. The recording sheet 7 is supplied from a sheet feeder, which is not shown. The fixing device 40 fixes the toner images transferred onto the recording sheet 7.

The image forming units 10 are constituted by four image forming units 10Y, 10M, 10C, and 10K that are specially used for forming yellow (Y), magenta (M), cyan (C), and black (K) toner images, respectively. These four image forming units 10Y, 10M, 10C, and 10K are arranged in the horizontal direction X within the internal space of the image forming apparatus 1.

Each of the image forming units 10Y, 10M, 10C, and 10K includes a photoconductor drum 11, which is an example of an image carrier, a charger 12, an exposure device 13, which is an example of an exposure device, a developing device 14, a first transfer device 15, and a drum cleaner 16, for example. The charger 12 charges an image forming peripheral surface (image carrying surface) of the photoconductor drum 11 at a certain potential. The exposure device 13 applies light based on image data to the charged peripheral surface of the photoconductor drum 11 so as to form an electrostatic latent image of a corresponding color. The potentials of the electrostatic latent images formed by the exposure devices 13 of the individual image forming units 10Y, 10M, 10C, and 10K are different from each other. The developing devices 14 of the individual image forming units 10Y, 10M, 10C, and 10K develop the electrostatic latent images with the corresponding colors (Y, M, C, and K) of toners to form toner images. The first transfer devices 15 transfer the toner images to the intermediate transfer device 20 at the first transfer position. The drum cleaner 16 removes deposits, such as toner, remaining on the image carrying surface of the photoconductor drum 11 after the first transfer operation.

As shown in Fig. 1, the intermediate transfer device 20 is disposed under the image forming units 10Y, 10M, 10C, and 10K in the vertical direction Z. The intermediate transfer device 20 largely includes an intermediate transfer belt 21, multiple belt support rollers 22, 23, and 24, a second transfer device 30, and a belt cleaner, which is not shown.

The sheet transport device 50 transports a recording sheet 7 supplied from the sheet feeder, which is not shown, to the second transfer position. The sheet transport device 50 also transports the recording sheet 7 having the individual colors of toner images transferred thereon at the second transfer position to the fixing device 40. In the example in Fig. 1, the sheet transport device 50 is formed in a belt-like shape by the sheet transport belt 51. However, the sheet transport device 50 may alternatively include multiple pairs of sheet transport rollers.

The fixing device 40 includes a heating rotator 41 and a pressurizing rotator 42, for example. In the fixing device 40, a contact area where the heating rotator 41 and the pressurizing rotator 42 contact each other serves as a fixing processing portion that performs required fixing processing, such as heating and pressurizing processing.


(Operation of Image Forming Apparatus)

The basic image forming operation of the image forming apparatus 1 will be explained below.

As the image forming operation, a full-color-mode image forming operation for forming a full-color image constituted by four colors (Y, M, C, and K) of toner images by using the four image forming units 10Y, 10M, 10C, and 10K will be discussed below.

The image forming apparatus 1 receives image data and instruction information indicating a request to form (print) a full-color image from an external device, such as the image reader 5 or the PC 6. Then, the controller 4 starts certain devices, such as the four image forming units 10Y, 10M, 10C, and 10K, intermediate transfer device 20, second transfer device 30, and fixing device 40.

In each of the image forming units 10Y, 10M, 10C, and 10K, as illustrated in Fig. 1, the photoconductor drum 11 is first rotated in the direction indicated by the arrow in Fig. 1. The charger 12 then charges the surface of the photoconductor drum 11 at a certain polarity and potential. Then, the exposure device 13 of each of the image forming units 10Y, 10M, 10C, and 10K applies light, which is to be emitted based on image data of the corresponding one of the color components Y, M, C, and K, to the charged surface of the photoconductor drum 11. As a result, electrostatic latent images of the individual colors having certain potential differences are formed on the surfaces of the corresponding photoconductor drums 11.

Subsequently, the developing devices 14 of the image forming units 10Y, 10M, 10C, and 10K develop the electrostatic latent images. More specifically, each developing device 14 electrostatically attaches the corresponding color of toner, which is charged at a certain potential, supplied from a developing roller 141 to the electrostatic latent image formed on the photoconductor drum 11. After this developing operation, the electrostatic latent images of the individual color components formed on the photoconductor drums 11 are visualized as toner images of four colors (Y, M, C, and K) developed with the corresponding colors of toners.

Next, the toner images of the individual colors formed on the photoconductor drums 11 of the image forming units 10Y, 10M, 10C, and 10K are transported to the first transfer position. Then, the first transfer devices 15 sequentially transfer the corresponding colors of toner images to the intermediate transfer belt 21 rotating in the direction indicated by the arrow in Fig. 1 so that the toner images can be superimposed on each other.

After the first transfer operation, the drum cleaners 16 clean the surfaces of the photoconductor drums 11 by scraping deposits remaining on the photoconductor drums 11. Then, the image forming units 10Y, 10M, 10C, and 10K are ready for the next image forming operation.

Subsequently, the intermediate transfer device 20 rotates and transports the toner images transferred to the intermediate transfer belt 21 to the second transfer position. Meanwhile, based on the image forming operation, the sheet transport device 50 transports a recording sheet 7 to the second transfer position in accordance with the timing of the second transfer operation.

At the second transfer position, the second transfer device 30 transfers the toner images on the intermediate transfer belt 21 to the recording sheet 7 together. After the second transfer operation, the belt cleaner, which is not shown, of the intermediate transfer device 20 cleans the surface of the intermediate transfer belt 21 by removing deposits, such as toner, remaining on the intermediate transfer belt 21.

Then, the recording sheet 7 having the toner images thereon is transported to the fixing device 40 by the sheet transport belt 51. In the fixing device 40, the heating rotator 41 and the pressurizing rotator 42 perform certain fixing processing, such as heating and pressurizing processing, so as to fix the toner images onto the recording sheet 7. After the fixing operation, the recording sheet 7 is output to a sheet output unit, which is not shown.

As a result of the above-described operation, the recording sheet 7 having a full-color image constituted by four toner images formed thereon is output.

(Configuration of Exposure Device)

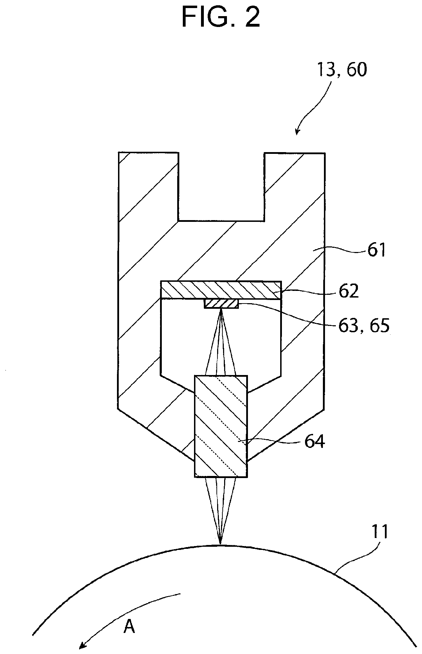

As illustrated in Fig. 2, the image forming apparatus 1 of the exemplary embodiment includes the exposure device 13, which is an example of the optical scanning device.

The exposure device 13 is disposed over the entire image forming region in the axial direction (direction perpendicular to the plane of the drawing) of the photoconductor drum 11, which is an example of a subject to be scanned, so as to face the photoconductor drum 11. The exposure device 13 is constituted by a light-emitting diode (LED) print head 60, which is an example of a scanner. The LED print head 60 includes an array of LEDs, which are multiple light-emitting elements, along the main scanning direction, which is the axial direction of the photoconductor drum 11. The LED print head 60 performs a scanning exposure operation by applying light to the surface of the photoconductor drum 11, which is charged at a certain potential by the charger 12 and is rotated at a certain rotational speed (circumferential speed), based on image information, thereby forming an electrostatic latent image on the surface of the photoconductor drum 11. Hereinafter, the scanning exposure operation of the LED print head 60 may simply be called scanning operation or scanning.

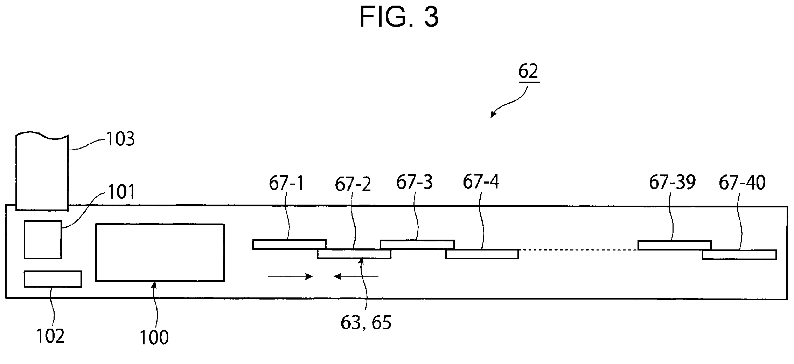

The LED print head 60 includes a housing 61, which is a support body, an LED circuit substrate 62, and a rod lens array 64, for example. As illustrated in Fig. 3, on the LED circuit substrate 62, an LED array 63 including multiple LEDs arranged along the main scanning direction, a signal generating circuit 100, which is an example of a driver for driving the LED array 63, and other elements are mounted.

As the LED array 63, the LED print head 60 uses a self-scanning light-emitting device (LED) (hereinafter called an SLED) 65.

The rod lens array 64 is an optical component that forms an image on the surface of the photoconductor drum 11 by using light from the SLED 65. The housing 61 holds the rod lens array 64 and also shields and protects the SLED 65 from external sources.

The housing 61 is made of a metal, such as aluminum or stainless use steel (SUS), or synthetic resin having heat resistance and is formed in an elongated frame-like or block-like shape extending in the direction intersecting with the plane of the drawing. The LED circuit substrate 62 is disposed on the end surface of the housing 61 which faces the photoconductor drum 11. The housing 61 holds the LED circuit substrate 62 and the rod lens array 64 such that the light emitting point of the SLED 65 mounted on the LED circuit substrate 62 and the focal point at one end of the rod lens array 64 in the optical axis direction (up-down direction in Fig. 2) coincide with each other.

The LED print head 60 configured as described above is movable along the optical axis of the rod lens array 64 by an adjust screw, which is not shown. The LED print head 60 is set so that the image forming position (focal plane) at the other end of the rod lens array 64 in the optical axis direction is located on the surface of the photoconductor drum 11.

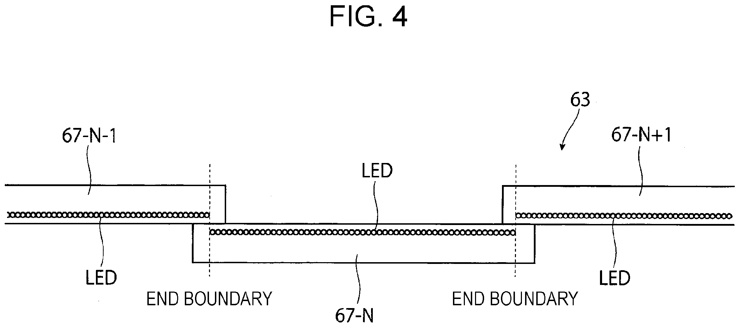

As illustrated in Fig. 3, on the LED circuit substrate 62, multiple (forty, for example) SLED chips 67-1 through 67-40, each of which is an example of a light-emitting element set, forming the SLED 65 are accurately linearly disposed in parallel with the axial direction of the photoconductor drum 11. In each of the SLED chips 67-1 through 67-40, multiple (256, for example) LEDs, which are an example of light-emitting elements, are arranged. The SLED chips 67-1 through 67-40 are alternately arranged in a staggered pattern. As shown in Fig. 4, the SLED chips 67-1 through 67-40 are arranged so that the LEDs become continuous at equal pitches at the adjacent boundaries of the SLED chips 67-1 through 67-40.

As shown in Fig. 3, at one end of a set of the SLED chips 67-1 through 67-40 in the longitudinal direction, the LED circuit substrate 62 includes the signal generating circuit 100, a power supply circuit 101, an electrically erasable programmable read only memory (EEPROM) 102, which is an example of a storage, and a harness 103. The signal generating circuit 100 generates a signal (light-emitting signal) for driving each of the SLED chips 67-1 through 67-40. The power supply circuit 101 is constituted by a constant voltage power supply, such as a three-terminal regulator, that outputs a predetermined voltage to each of the SLED chips 67-1 through 67-40. The EEPROM 102 stores a correction value for irregularities of the amount of light emitted from each of the SLED chips 67-1 through 67-40 and parameters for controlling a discard current, which will be discussed later. The harness 103 sends and receives various signals between the signal generating circuit 100 and some elements of the image forming apparatus 1, such as the controller 4 and the image processor 2.

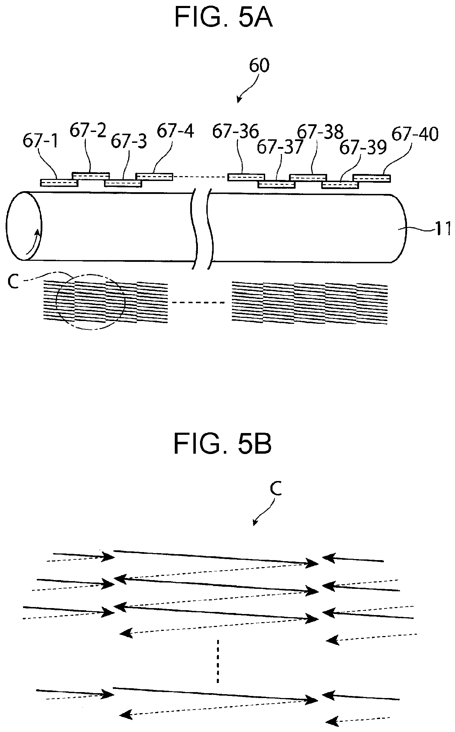

As shown in Figs. 5A and 5B, when the LED print head 60 performs a scanning operation by applying light to the surface of the photoconductor drum 11 based on image data, the SLED chips 67-1 through 67-40 are simultaneously driven line by line. When the SLED chips 67-1 through 67-40 have finished scanning for one line, they start scanning for the next line after a certain break period. The arrows indicated by the broken lines in Fig. 5B represent a state in which the scanning position for the photoconductor drum 11 is shifted after a break period.

In the example in Figs. 5A and 5B, the SLED chips 67-1 through 67-40 perform scanning in the same direction, that is, from the left end to the right end in Fig. 5B. However, this is only an example. Among the SLED chips 67-1 through 67-40, adjacent SLED chips may perform scanning in the opposite directions, for instance, the first SLED chip 67-1 may perform scanning from the left end to the right end in Fig. 5B, while the second SLED chip 67-2 may perform scanning from the right end to the left end in Fig. 5B.

(SLED Chip)

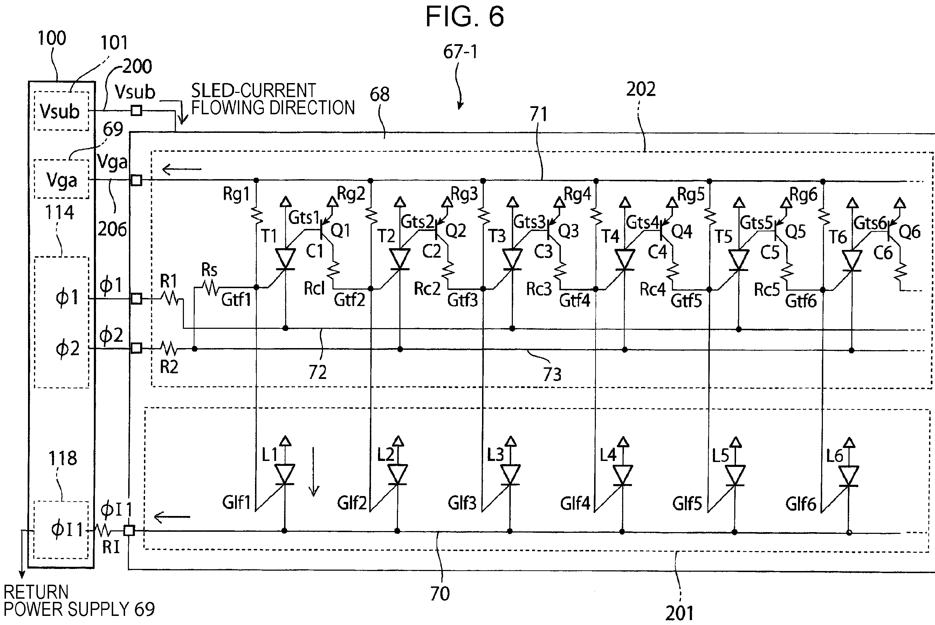

Fig. 6 is an equivalent circuit diagram illustrating the circuit configuration of the SLED chip 67 mounted on the LED print head 60 of the exemplary embodiment. As shown in Fig. 6, the SLED chip 67 includes multiple (four in Fig. 6, for example) terminals ($\varphi$1 terminal, $\varphi$2 terminal, Vga terminal, and $\varphi$I terminal) on a substrate 68. On the back side of the substrate 68, a Vsub terminal is provided. As the SLED chip 67, the first SLED chip 67-1 will be explained by way of example in relation to the signal generating circuit 100. The other SLED chips 67-2 through 67-40 are configured similarly to the first SLED chip 67-1.

As illustrated in Fig. 6, the SLED chip 67-1 is largely divided into a light-emitting portion 201 and a transfer portion 202. The light-emitting portion 201 of the SLED chip 67-1 includes multiple light-emitting thyristors L1, L2, L3, ..., which are an example of multiple light-emitting elements, linearly arranged on the substrate 68. The transfer portion 202 of the SLED chip 67-1 includes multiple transfer thyristors T1, T2, T3, ... linearly arranged on the substrate 68 in association with the light-emitting thyristors L1, L2, L3, ....

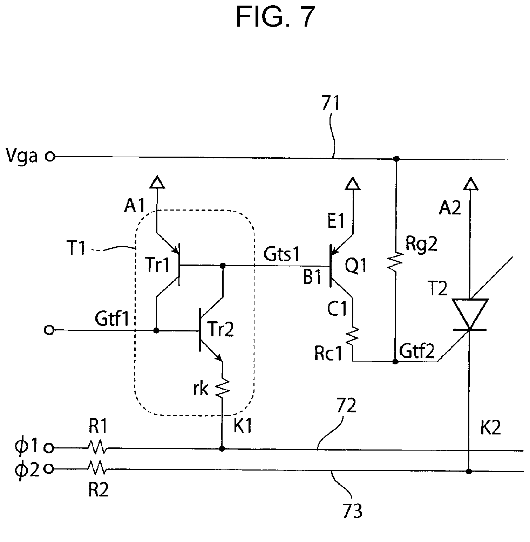

The light-emitting thyristors L1, L2, L3, ... and the transfer thyristors T1, T2, T3, ... are each formed on the substrate 68, such as an Si substrate, as a semiconductor element. The semiconductor element of each of the light-emitting thyristors L1, L2, L3, ... has a first gate Glf, which is a regular gate, at the cathode and also a second gate Gls at the anode. The semiconductor element of each of the transfer thyristors T1, T2, T3, ... has a first gate Gtf, which is a regular gate, at the cathode and also a second gate Gts at the anode. Fig. 7 is a circuit diagram illustrating the transfer thyristor T1 in the form of a transistor. The second gate Gls of each of the light-emitting thyristors L1, L2, L3, ... is not shown since it is not connected to any element.

As illustrated in Fig. 6, the anodes of the light-emitting thyristors L1, L2, L3, ... and the transfer thyristors T1, T2, T3, ... are connected to the Vsub terminal laid on the back side of the substrate 68. The Vsub terminal is connected to the power supply circuit 101 of the LED circuit substrate 62 via a power supply line 200. In the exemplary embodiment, the power supply circuit 101 is set to "H" (3.3 V). The potential of the Vsub terminal is thus "H" (3.3 V). A light-emitting current is supplied from the power supply circuit 101 to the Vsub terminal of the SLED chip 67-1 via the power supply line 200. The light-emitting current flows from the Vsub terminal to the anodes of the light-emitting thyristors L1, L2, L3, ... and further flows from the cathodes of the light-emitting thyristors L1, L2, L3, ... to a reference potential supplier 69, which serves as a return power supply, via a light-emitting signal line 70 and light-emitting-time-controllers/drivers 118-1 through 118-40 of the signal generating circuit 100. In this example, the potential of the Vsub terminal is "H" (3.3 V) and the potential of the Vga terminal is "L" (0 V). For the sake of an explanation of the operation of the SLED chip 67-1, however, the potential of the Vsub terminal may be "H" (0 V) and the potential of the Vga terminal may be "L" (-3.3 V).

The cathodes of the light-emitting thyristors L1, L2, L3, ... are connected to the light-emitting signal line 70. The light-emitting signal line 70 is connected to the $\varphi$I1 terminal of the SLED chip 67-1. The $\varphi$I1 terminal of the SLED chip 67-1 is connected to the light-emitting-time-controller/driver 118 of the signal generating circuit 100 via a current limiting resistor RI. The light-emitting-time-controller/driver 118 supplies a light-emitting signal $\varphi$I1 for controlling the ON/OFF state of each of the light-emitting thyristors L1, L2, L3, ... and the light-emitting time period. The light-emitting signal $\varphi$I1 is used for supplying a current to turn ON the light-emitting thyristors L1, L2, L3, .... For the sake of convenience, a terminal and a signal corresponding to each other or a terminal and a voltage to be supplied to the terminal are designated by the same reference sign.

The first gates Glfn of the light-emitting thyristors L1, L2, L3, ... are connected to a power supply line 71 via resistors Rgn, as shown in Fig. 6. The power supply line 71 is connected to the Vga terminal of the SLED chip 67-1. The Vga terminal is connected to the reference potential supplier 69, which serves as the return power supply, via a reference potential line 206. The reference voltage Vga of the reference potential supplier 69 is set to -3.3 V, for example.

Among the transfer thyristors T1, T2, T3, ..., the cathodes of the odd-numbered transfer thyristors T1, T3, T5, ... are connected to a first transfer signal line 72 to which a first transfer signal φ1 is supplied. The first transfer signal line 72 is connected to the φ1 terminal of the SLED chip 67 via a current limiting resistor R1 which prevents an overcurrent from flowing through the first transfer signal line 72. The first transfer signal φ1 is supplied from a timing signal generator 114 of the signal generating circuit 100 to the φ1 terminal of the SLED chip 67.

Among the transfer thyristors T1, T2, T3, ..., the cathodes of the even-numbered transfer thyristors T2, T4, T6, ... are connected to a second transfer signal line 73 to which a second transfer signal φ2 is supplied. The second transfer signal line 73 is connected to the φ2 terminal of the SLED chip 67 via a current limiting resistor R2 which prevents an overcurrent from flowing through the second transfer signal line 73. The second transfer signal φ2 is supplied from the timing signal generator 114 of the signal generating circuit 100 to the φ2 terminal of the SLED chip 67.

In the SLED chip 67-1, coupling transistors Q1, Q2, Q3, ... are each disposed between two adjacent transfer thyristors Tn and Tn+1. The base of each of the coupling transistors Q1, Q2, Q3, ... is connected to the second gate Gtsn of the preceding transfer thyristor Tn. The collector terminal of each of the coupling transistors Q1, Q2, Q3, ... is connected to the first gate Gtfn+1 of the subsequent transfer thyristor Tn+1 via a resistor Rcn. The bases of the coupling transistors Q1, Q2, Q3, ... are connected to the Vsub terminal laid on the back side of the substrate 68.

The first gate Gtf1 of the first transfer thyristor T1 is connected via a start resistor Rs to the second transfer signal line 73, which is a stage subsequent to the current limiting resistor R2.


(Operation of SLED Chip)

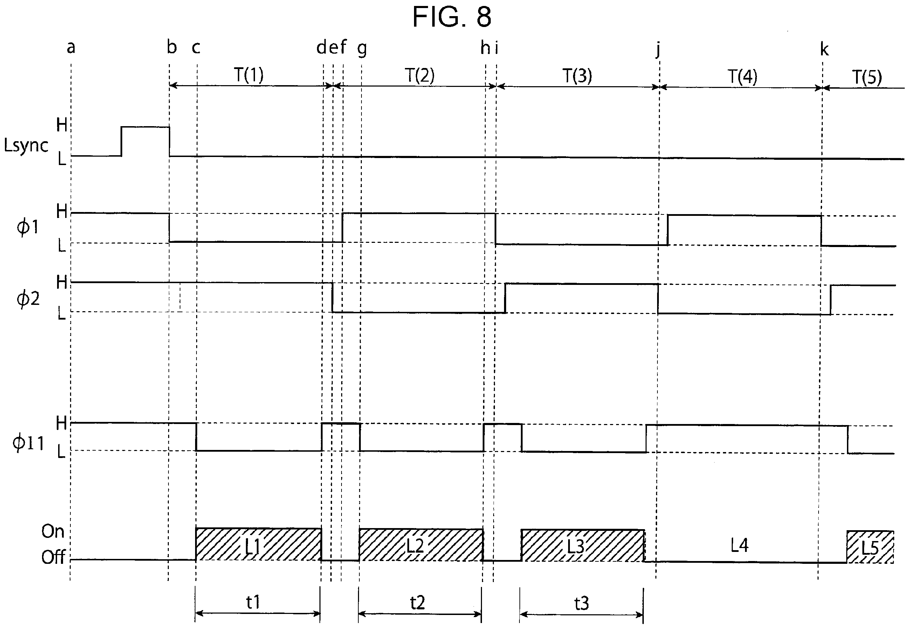

Fig. 8 is a timing chart of the operation of the SLED chip 67 of the LED print head 60 of the exemplary embodiment.

The timing chart of Fig. 8 shows that, among multiple (256, for example) light-emitting thyristors L1 through L256 of the SLED chip 67, the ON/OFF states of five light-emitting thyristors L1 through L5 are controlled. In Fig. 8, the light-emitting thyristors L1, L2, L3, and L5 are turned ON, while the light-emitting thyristor L4 is turned OFF.

Among the SLED chips 67-1 through 67-40 mounted on the LED circuit substrate 62, the other SLED chips 67-2 through 67-40 are driven together with the SLED chip 67-1, as shown in Figs. 5A and 5B. In this example, the operation of the first SLED chip 67-1 will be explained.

At the start of the image exposure operation using the LED print head 60, a line sync signal Lsync is sent from the controller 4 to the timing signal generator 114 of the signal generating circuit 100. For example, when exposing the surface of the photoconductor drum 11 to light by scanning, the line sync signal Lsync rises from "L" to "H" and then falls from "H" to "L" for each line. Before the line sync signal Lsync falls down, at time a in Fig. 8, for example, the potentials of the first and second transfer signals φ1 and φ2 and the light-emitting signal φl1 are all "H" (0 V).

In the transfer portion 202 of the SLED chip 67, as shown in Fig. 6, the cathodes of the odd-numbered transfer thyristors T1, T3, T5 ... are connected to the first transfer signal line 72 that is set at "H". Likewise, the cathodes of the even-numbered transfer thyristors T2, T4, T6 ... are connected to the second transfer signal line 73 that is set at "H". Accordingly, the potentials of the anodes and the cathodes of the odd-numbered transfer thyristors T1, T3, T5 ... and those of the even-numbered transfer thyristors T2, T4, T6 ... are all "H" and the odd-numbered transfer thyristors T1, T3, T5 ... and the even-numbered transfer thyristors T2, T4, T6 ... are thus in the OFF state.

The cathodes of the light-emitting thyristors L1, L2, L3 ... are connected to the light-emitting signal line 70 that is set at "H". Accordingly, the potentials of the anodes and the cathodes of the light-emitting thyristors L1, L2, L3 ... are also all "H" and the light-emitting thyristors L1, L2, L3 ... are thus in the OFF state.

As shown in Fig. 6, the first gate Gtf1 of the first transfer thyristor T1 of the transfer portion 202 is connected via the resistor Rg1 to the power supply line 71 that is set at "L" (-3.3 V). The first gate Gtf1 of the first transfer thyristor T1 is also connected to the second transfer signal line 73 set at "H" (0 V) via the start resistor Rs.

With this configuration, the potential of the first gate Gtf1 of the first transfer thyristor T1 results in the potential calculated by dividing the potential difference between "L" (-3.3 V) of the power supply line 71 and "H" (0 V) of the second transfer signal line 73 by the resistance values of the resistor Rg1, the start resistor Rs, and the current limiting resistor R2. If the value of the resistor Rg1 is 10 kΩ, that of the start resistor Rs is 2 kΩ, and that of the current limiting resistor R2 is 300 Ω, the potential of the first gate Gtf1 results in -0.62 V. The threshold voltage of the first transfer thyristor T1 is calculated by subtracting Vd from Vgtf, that is, Vgtf-Vd, where Vd is the diffusion potential (1.5 V, for example) of the first transfer thyristor T1, that is, -0.62 - 1.5 = -2.12 V. As discussed above, the potential of the first gate Gtf1 of the first transfer thyristor T1 is determined by the voltage of "L" (-3.3 V) of the power supply line 71 and the resistance values of the resistor Rg1, start resistor Rs, and current limiting resistor R2. Since the first gate Glf1 of the first light-emitting thyristor L1 is connected to the first gate Gtf1 of the first transfer thyristor T1, the threshold voltage of the first light-emitting thyristor L1 is also - 2.12 V.

At this time, since the first transfer thyristor T1 is OFF, the coupling transistor Q1 is also OFF. The first gate Gtf2 of the second transfer thyristor T2 is connected to the potential "L" (-3.3 V) of the power supply line 71 via the resistor Rg2. The threshold voltage of the second transfer thyristor T2 is thus -3.3 V - 1.5 = -4.8 V. Likewise, the threshold voltages of the third, fourth, and fifth transfer thyristors T3, T4, and T5 are also -4.8 V.

Then, at time b in Fig. 8, when the line sync signal Lsync falls from "H" to "L", the first transfer signal φ1 output from the timing signal generator 114 of the signal generating circuit 100 synchronously shifts from "H" to "L". Then, the first transfer thyristor T1 having a threshold voltage of -2.12 V is turned ON since the first transfer signal line 72, that is, the cathode of the first transfer thyristor T1, is changed to "L" (-3.3 V), as shown in Fig. 6. Although the third and subsequent odd-numbered transfer thyristors T are also connected at the cathodes to the first transfer signal line 72, they are not turned ON and remains OFF since the threshold voltages are -4.8 V, as discussed above. The even-numbered transfer thyristors T2, T4, T6 ... are not turned ON since the second transfer signal line 73 is maintained at "H" (0 V).

The first gate Gtf1 of the first transfer thyristor T1 that is in the ON state reaches the saturation potential Vc of the transistor Tr1, as shown in Fig. 7. It is assumed that the saturation potential Vc is -0.2 V, for example. The first gate Gtf1 of the first transfer thyristor T1 thus becomes at -0.2 V, and the second gate Gts1 becomes at the potential (-1.5 V) calculated by subtracting the diffusion potential Vd (1.5 V) from the potential of the anode A1 ("H" (0 V)).

In the first transfer thyristor T1 that is in the ON state, a current flows from the anode A1 ("H" (0 V)) to the terminal φ1 ("L" (-3.3 V)) connected to the cathode K1. Hence, the potential Vk of the cathode K1 of the first transfer thyristor T1 is represented by the following expression (1) based on the internal resistor rk (resistance value is also represented by rk) of the first transfer thyristor T1, the current limiting resistor R1 (resistance value is also represented by R1), and the diffusion potential Vd.

$$Vk = (Vga+Vd) \times \{rk/(R1+rk)\} - Vd \qquad (1)$$

In one example, when the current limiting resistor R1 is 300 Ω and the internal resistor rk is 60 Ω, the potential Vk of the cathode K1 is calculated as -1.8 V. The potential Vk of the cathode K1 is the potential of the first transfer signal line 72.

As discussed above, the first gate Gtf1 of the first transfer thyristor T1 is at -0.2 V. Since the first gate Glf1 of the first light-emitting thyristor L1 is connected to the first gate Gtf1 (-0.2 V) of the first transfer thyristor T1, the threshold voltage of the first light-emitting thyristor L1 can be calculated as -0.2 - 1.5 = -1.7 V.

When the first transfer thyristor T1 is turned ON, the coupling transistor Q1 also shifts from the OFF state to the ON state. The first gate Gtf2 of the second transfer thyristor T2 is thus changed to -0.72 V, and the threshold voltages of the second transfer thyristor T2 and the second light-emitting thyristor L2 result in -2.22 V. However, the second transfer signal line 73 is still at "H" (0 V), and the second transfer thyristor T2 is not turned ON. The light-emitting signal line 70 is also still at "H" (0 V), and the second light-emitting thyristor L2 is not turned ON, either.

Since the second transfer thyristor T2 is OFF, the coupling transistor Q2 is also OFF. The first gate Gtf3 of the third transfer thyristor T3 is at "L" (-3.3 V), and the threshold voltages of the third transfer thyristor T3 and the third light-emitting thyristor L3 are -4.8 V. Likewise, the threshold voltages of the fourth and subsequent transfer thyristors T and light-emitting thyristors are also -4.8 V.

Immediately after time b at which the states of thyristors are transitioned due to a change in a signal potential, the thyristors enter the steady state. Immediately after time b, the first transfer thyristor T1 and the coupling transistor Q1 are ON, while the other transfer thyristors T and coupling transistors Q and all the light-emitting thyristors L are OFF.

Subsequently, as illustrated in Fig. 8, at time c, the light-emitting signal φl1 shifts from "H" to "L". Then, as shown in Fig. 6, the light-emitting signal line 70 shifts from "H" (0 V) to "L" (-3.3 V) via the current limiting resistor RI and the φl terminal. Then, the first light-emitting thyristor L1 having a threshold voltage of -1.7 V is turned ON and starts emitting light. The potential of the light-emitting signal line 70 becomes -1.86 V.

The threshold voltage of the second light-emitting thyristor L2 is -2.22 V, as discussed above. However, since the first light-emitting thyristor L1 having a threshold voltage as high as -1.7 V is turned ON to change the potential of the light-emitting signal line 70 to -1.86 V, the second light-emitting thyristor L2 is not turned ON.

Immediately after time c, the first transfer thyristor T1 and the coupling transistor Q1 are ON, and the first light-emitting thyristor L1 is also ON and emitting light.

Subsequently, at time d, the light-emitting signal φl1 shifts from "L" to "H". Then, the light-emitting signal line 70 shifts from -1.86 V to "H" (0 V) via the current limiting resistor RI and the φl terminal. Then, the anode and the cathode of the first light-emitting thyristor L1 are both changed to "H" and are turned OFF and stop emitting light. The light-emitting period t1 of the first light-emitting thyristor L1 is from time c at which the light-emitting signal φl1 shifts from "H" to "L" to time d at which the light-emitting signal φl1 shifts from "L" to "H". The light-emitting period t1 of the first light-emitting thyristor L1 is thus controlled by the time for which the light-emitting signal φl1 is maintained at "L" based on image data, for example. Immediately after time d, the first transfer thyristor T1 and the coupling transistor Q1 are in the ON state.

At time e, the second transfer signal φ2 shifts from "H" to "L". At this time, the period T(1) for which the ON state of the first light-emitting thyristor L1 is controlled is finished, and the period T(2) for which the ON state of the second light-emitting thyristor L2 is controlled is started. Then, the φ2 terminal shifts from "H" to "L" (-3.3 V). Since the first transfer thyristor T1 is ON, the first gate Gtf1 of the first transfer thyristor T1 is at -0.2 V. Hence, the potential of the second transfer signal line 73 is calculated by dividing the potential difference between "L" (-3.3 V) and -0.2 V by the resistance value of the start resistor Rs (2 kΩ) and that of the current limiting resistor R2 (300 Ω), that is, it is calculated as -2.9 V.

The threshold voltage of the second transfer thyristor T2 is -2.22 V at time b, and the second transfer thyristor T2 is thus turned ON at time e. The potential of the first gate Gtf2 (first gate Glf2) of the second transfer thyristor T2 becomes -0.2 V and the threshold voltage of the second light-emitting thyristor L2 becomes -1.7 V. When the second transfer thyristor T2 is turned ON, the potential of the second transfer signal line 73 is changed to -1.8 V.

As a result of the second transfer thyristor T2 being turned ON, the coupling transistor Q2 also shifts from the OFF state to the ON state and the potential of the first gate Gtf3 of the third transfer thyristor T3 becomes -0.72 V. The threshold voltages of the third transfer thyristor T3 and the third light-emitting thyristor L3 become -2.22 V. The threshold voltages of the fourth and subsequent transfer thyristors T and light-emitting thyristors L are maintained at -4.8 V. The light-emitting signal φI1 is at "H" (0 V), and none of the light-emitting thyristors L are turned ON. Immediately after time e, the first and second transfer thyristors T1 and T2 and the coupling transistors Q1 and Q2 are in the ON state.

Subsequently, at time f, the first transfer signal φ1 shifts from "L" to "H". Then, the potential of the first transfer signal line 72 shifts from "L" to "H" via the φ1 terminal. Then, the anode and the cathode of the first transfer thyristor T1 that is in the ON state are both changed to "H" and are turned OFF.

The first gate Gtf1 (first gate Glf1) is connected to the power supply line 71 ("L" (-3.3 V)) via the resistor Rg1 and is also connected to the second transfer signal line 73 ("L" (-3.3 V)) via the start resistor Rs. Hence, the potential of the first gate Gtf1 (first gate Glf1) of the first transfer thyristor T1 is changed from -0.2 V to "L" (-3.3 V), and the threshold voltages of the first transfer thyristor T1 and the first light-emitting thyristor L1 become -4.8 V. Immediately after time f, the second transfer thyristor T2 is in the ON state.

At time g, when the light-emitting signal φI1 shifts from "H" to "L", the second light-emitting thyristor L2 is turned ON and starts emitting light, as in the first light-emitting thyristor L1 at time c. At time h, when the light-emitting signal φI1 shifts from "L" to "H", the second light-emitting thyristor L2 is turned OFF and stops emitting light, as in the first light-emitting thyristor L1 at time d.

At time i, the first transfer signal φ1 shifts from "H" to "L", and then, the third transfer thyristor T3 having a threshold voltage of -2.22 V is turned ON, as in the first transfer thyristor T1 at time b and the second transfer thyristor T2 at time e. At this time, the first transfer thyristor T1 is not turned ON since the threshold voltage is -4.8 V. At time i, the period T(2) for which the ON state of the second light-emitting thyristor L2 is controlled is finished and the period T(3) for which the ON state of the third light-emitting thyristor L3 is controlled is started.

To keep the light-emitting thyristor L at OFF, the light-emitting signal φI1 is maintained at "H" (0 V), as in the light-emitting signal φI1 in the period T(4) for which the ON state of the fourth light-emitting thyristor L4 is controlled, as shown in Fig. 8. This keeps the fourth light-emitting thyristor L4 at OFF even if the threshold voltage remains at -1.7 V.

Thereafter, the ON/OFF states of the subsequent light-emitting thyristors L up to the 256-th light-emitting thyristor L256 are controlled in a similar manner. After the controlling of the ON/OFF state of the 256-th light-emitting thyristor L256 has finished, the first and second transfer signals φ1 and φ2 and the light-emitting signal φI1 are all changed to "H" (0 V) and a break period is started.

At this time, as shown in Fig. 6, Vga (-3.3 V) is applied to the Vga terminal of each SLED 67 from the reference potential supplier 69, which serves as the return power supply, via the reference potential line 206. A light-emitting current flows to the Vsub terminal via the power supply line 200 and further to the anodes ("H" (0 V)) and the cathodes of the light-emitting thyristors L1, L2, L3, ..., which emit light after the light-emitting signal φI1 for the SLED chips 76 shifts to "L", and further to the light-emitting signal line 70 via the cathodes of the light-emitting thyristors L1, L2, L3, ....

The amount of light-emitting current flowing toward the light-emitting thyristors L1, L2, L3, ... varies among the SLED chips 67-1 through 67-40, depending on the number of light-emitting thyristors L1, L2, L3, ... that are simultaneously emitting light, and the light-emitting time, and also the light-emitting strength. For the sake of simple explanation, it is assumed that the light-emitting strength is fixed.

Because of the variations of the light-emitting current, in the SLED chips 67-1 through 67-40 of the LED print head 60, a high light-emitting current may be supplied from the power supply circuit 101, which is constituted by a constant voltage power supply, to the Vsub terminal via the power supply line 200, depending on the light-emitting state of the light-emitting thyristor L immediately before a break period. This high light-emitting current is interrupted the instant that the break period is started.

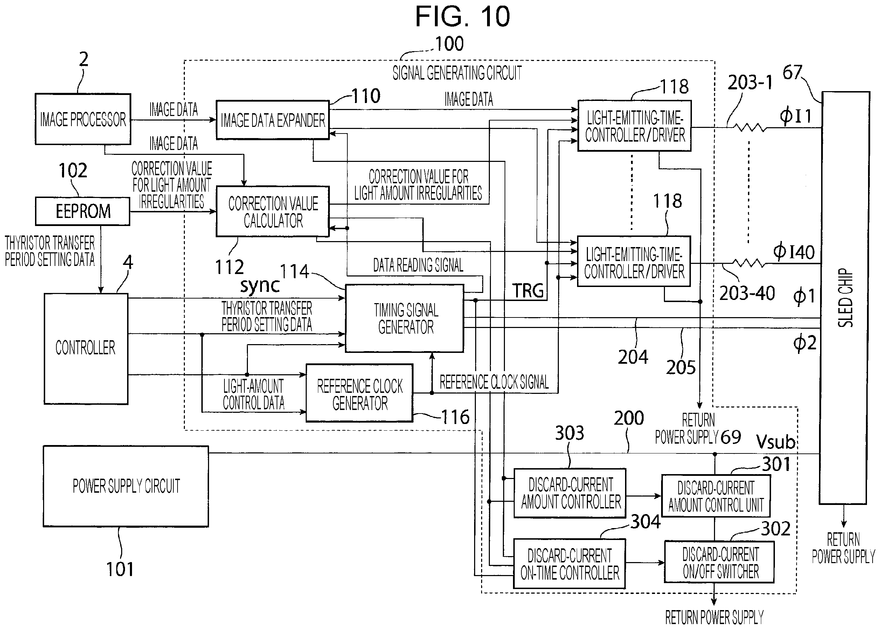

Fig. 10 is a block diagram illustrating the configuration of the signal generating circuit 100.

As illustrated in Fig. 10, the signal generating circuit 100 includes an image data expander 110 which receives image data from the image processor 2. The image data expander 110 expands image data input from the image processor 2 line by line to 256-pixel pieces of image data in association with the SLED chips 67-1 through 67-40. The image data expander 110 supplies the expanded image data to the light-emitting-time-controllers/drivers 118-1 through 118-40 provided in association with the SLED chips 67-1 through 67-40.

The signal generating circuit 110 also includes a correction value calculator 112 which receives a correction value for the light amount irregularities from the EEPROM 102 disposed on the LED circuit substrate 62. Image data is supplied from the image processor 2 to the correction value calculator 112. Correction values for the light amount irregularities are determined at a certain timing, such as at the time of shipping, by physically turning on the SLED chips 67-1 through 67-40 and measuring the light amount irregularities. The correction value calculator 112 calculates correction values for the light amount irregularities and supplies them to the light-emitting-time-controllers/drivers 118-1 through 118-40 for driving the corresponding SLED chips 67-1 through 67-40.

The signal generating circuit 100 also includes the timing signal generator 114 and a reference clock generator 116. A line sync signal Lsync, thyristor transfer period setting data, and light-amount control data are supplied from the controller 4 to the timing signal generator 114. The thyristor transfer period setting data is used for suitably setting the transfer periods of the thyristors in accordance with certain factors, such as the print speed. The timing signal generator 114 outputs a data reading signal to the image data expander 110 and the correction data calculator 112. The timing signal generator 114 also outputs a trigger signal TRG for providing synchronization to the light-emitting-time-controllers/drivers 118-1 through 118-40. The timing signal generator 114 also outputs the first and second transfer signals $\varphi1$ and $\varphi2$ to each of the SLED chips 67-1 through 67-40. The light-emitting-time-controllers/drivers 118-1 through 118-40 output the light-emitting signals $\varphi$I1 through $\varphi$I40 to the SLED chips 67-1 through 67-40 in accordance with the image data and correction value data for the light amount irregularities.

The reference clock generator 116 outputs a reference clock signal to the timing signal generator 114 and the light-emitting-time-controller/driver 118.

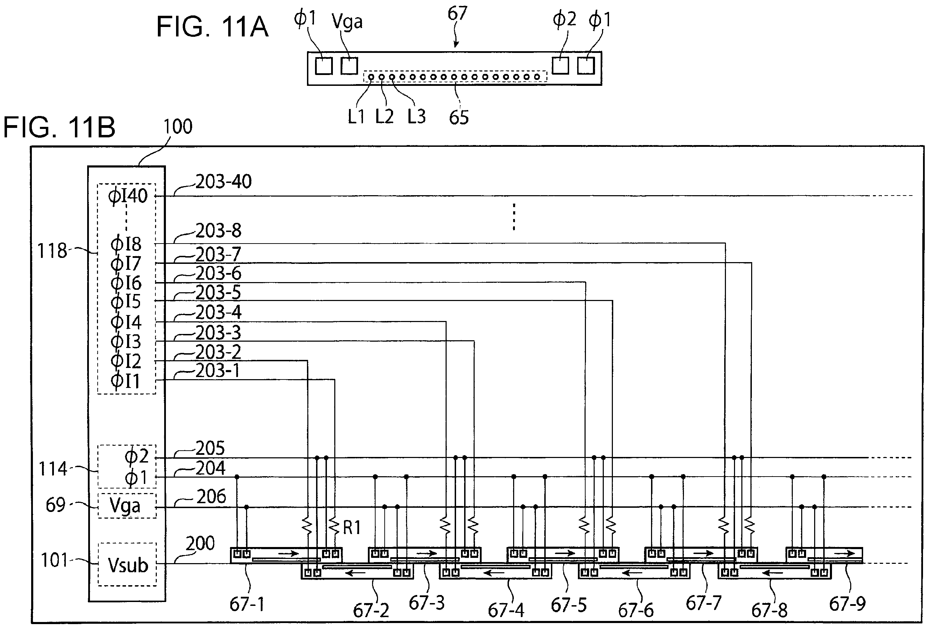

Fig. 11A illustrates the arrangement of elements of the SLED chip 67. Fig. 11B is a circuit diagram illustrating wiring between the signal generating circuit 100 and the SLED chips 67-1 through 67-40.

The $\varphi$I terminals of the SLED chips 67-1 through 67-40 are connected to the corresponding light-emitting-time-controllers/drivers 118-1 through 118-40 of the signal generating circuit 100 via the current limiting resistors RI by using light-emitting signal lines 203-1 through 203-40. The $\varphi1$ terminal and the $\varphi2$ terminal of each of the SLED chips 67-1 through 67-40 are connected to the timing signal generator 114 of the signal generating circuit 100 via first and second transfer signal lines 204 and 205. The Vga terminal of each of the SLED chips 67-1 through 67-40 is connected to the reference potential supplier 69 via the reference potential line 206, while the Vsub terminal of each of the SLED chips 67-1 through 67-40 is connected to the power supply circuit 101 via the power supply line 200.

To achieve high productivity by increasing the number of prints per unit time, it is desired to enhance the speed of the image forming apparatus 1 utilizing the LED print head 60 configured as described above. To respond to a demand for speeding up the image forming apparatus 1, it is necessary to increase the process speed determined by the rotational speed of the photoconductor drums 11 of the image forming units 10Y, 10M, 10C, and 10K. It is also desired to enhance the speed of the LED print head 60 by increasing the number of light-emitting thyristors L that emit light per unit time when performing image exposure for the surface of the photoconductor drum 11.

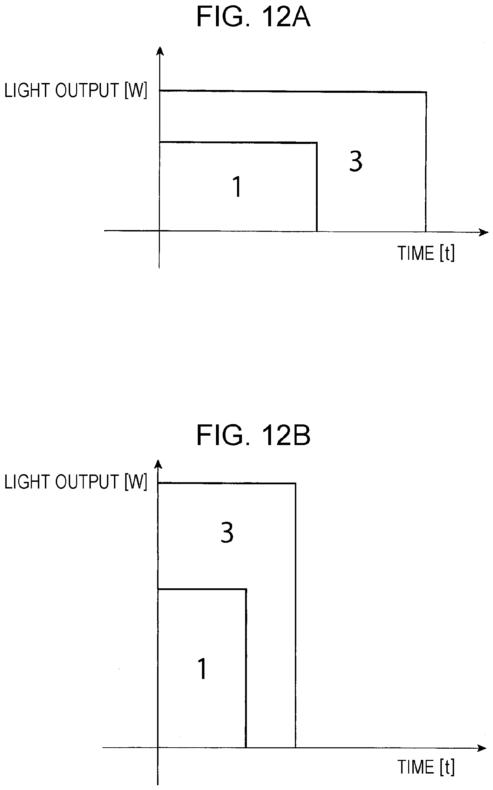

As shown in Figs. 12A and 12B, the LED print head 60 adjusts the amount of exposure for exposing the surface of the photoconductor drum 11 to light in accordance with image data by using at least one of the maximum light output, which is determined by the drive voltage to be applied to each LED of the LED print head 60, and the light-emitting time. To respond to a demand for speeding up the LED print head 60, the drive voltage to be applied to each LED may be raised, and the scanning time required for exposing one line of the photoconductor drum 11 to light may be reduced.

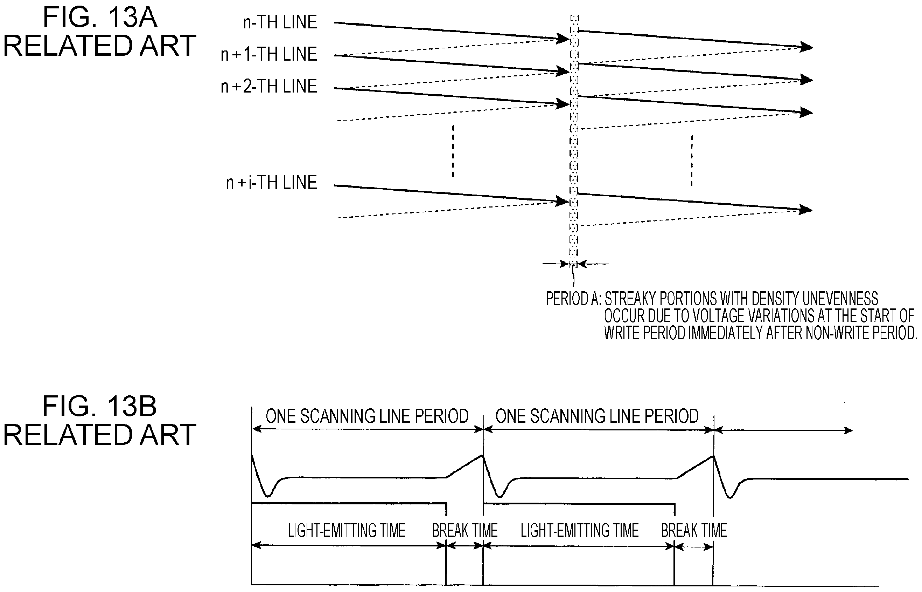

In the LED print head 60, to increase the speed, the scanning time for exposing one line of the photoconductor drum 11 to light may be reduced. To implement the reduced scanning time, it is required to shorten a break period, which is a non-scanning period between a scanning period and a subsequent scanning period, as shown in Fig. 13B.

In the LED print head 60, in accordance with the raised drive voltage to be applied to each LED, a current flowing through each LED is relatively increased. During a break period between scanning periods, a relatively high current flowing through each LED is instantaneously interrupted.

In the LED print head 60, as illustrated in Fig. 10, the power supply line 200 for applying the drive voltage to each LED from the power supply circuit 101, which is constituted by a DC-DC converter, for example, has inductance including electrostatic capacitance. In the LED print head 60, as illustrated in Fig. 13B, because of this inductance of the power supply line 200, even though the relatively high current flowing through each LED is instantaneously interrupted in a break period, the supply current is gradually decreased. Thus, the voltage of the power supply circuit 101 soars due to an overcurrent. As a result, in the LED print head 60, when the next line exposure is started after the break period, the voltage of the power supply circuit 101 is still high, and the supply voltage then sharply drops and then returns to the regular voltage.

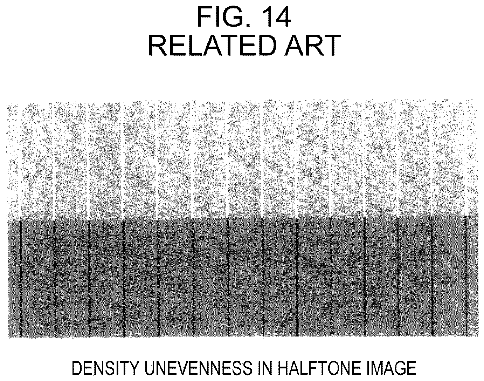

In a known LED print head, at the start of a scanning period immediately after the end of a break period, the light amount of the LED print head fluctuates due to a change in the drive voltage. Hence, at the start of the scanning operation of the exposure device, the density unevenness represented by white streaky portions having a low density and black streaky portions having a high density, for example, may occur in a halftone image, as shown in Fig. 14.

To address this technical issue, as disclosed in Japanese Unexamined Patent Application Publication No.

2015-074195, an optical scanning device including a power consumer that causes a light-emitting element set to consume power, which corresponds to power consumed for light-emitting operations of the light-emitting element set, has been proposed.

However, the unevenness of the image density caused by the variations in the drive voltage is influenced by another factor, such as the total light amount of the LEDs of the LED print head during a scanning period immediately before a break period. It is thus not possible to sufficiently reduce the above-described unevenness of the image density merely by consuming power corresponding to power consumed for light-emitting operations of the light-emitting element set.

To address this issue, the optical scanning device according to the exemplary embodiment includes a discard-current generator and a discard-current controller. The discard-current generator generates a current to be discarded (hereinafter called a discard current) which is to flow from a driver during a non-scanning period between scanning periods. The discard current is different from a current to flow to the light-emitting element set. The discard-current controller controls the discard current generated by the discard-current generator.

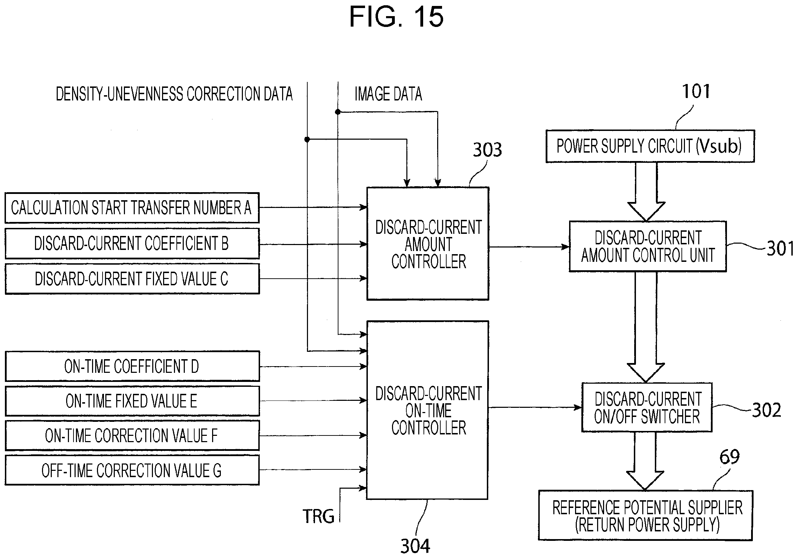

More specifically, as illustrated in Fig. 10, in the LED print head 60, which is an example of the optical scanning device of the exemplary embodiment, the signal generating circuit 100 mounted on the LED circuit substrate 62 includes a discard-current amount control unit 301, which is an example of a controller for the discard-current generator, and a discard-current ON/OFF switcher 302, which is an example of a switcher for turning ON or OFF the discard-current generator. The discard-current amount control unit 301 controls the value of a discard current Iab to flow during a break period, as shown in Fig. 15. The discard-current ON/OFF switcher 302 selectively causes the discard-current generator to generate a discard current or not to generate it and also controls the flowing timing of the discard current Iab. The discard-current amount control unit 301 is controlled by a discard-current amount controller 303. The discard-current ON/OFF switcher 302 is controlled by a discard-current ON-time controller 304. The discard-current amount control unit 301 and the discard-current ON/OFF switcher 302 are connected in series with the power supply circuit 101, which outputs the power supply voltage Vsub for the SLED chip 67, and the reference potential supplier 69, which is the return power supply for the SLED chip 67. The Vga terminal of the SLED chip 67 is connected to the reference potential supplier 69 and a return current from the SLED chip 67 flows into the reference potential supplier 69.

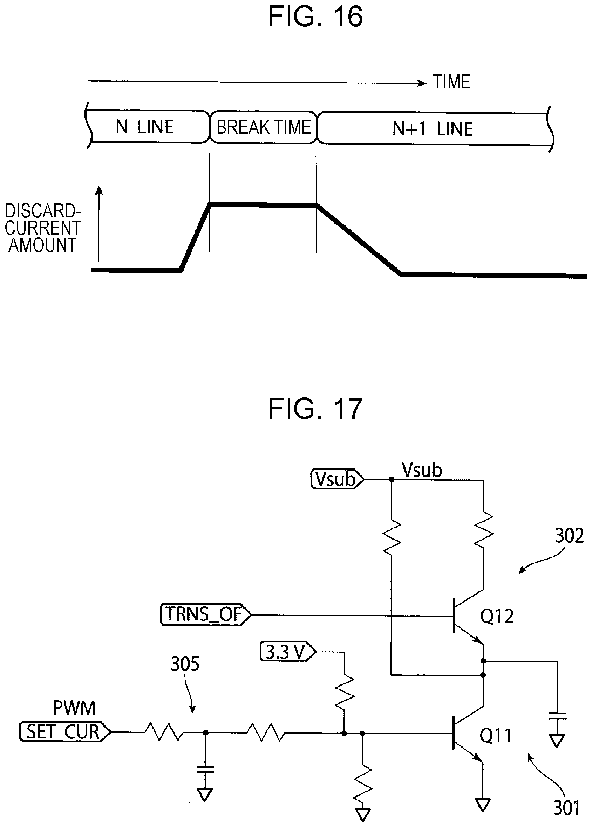

As illustrated in Fig. 17, as the discard-current amount control unit 301, for example, a first transistor Q11 that controls the discard-current amount by using a pulse width modulation (PWM) signal flowing through the base of the first transistor Q11 via a filter circuit 305 is used. The PWM signal is output from the discard-current amount controller 303 so as to control the value of the discard current Iab to a certain value. As the discard-current ON/OFF switcher 302, a second transistor Q12 is used. Vsub is applied to the collector of the second transistor Q12 via a resistor. A signal for controlling the ON timing and the OFF timing of the discard current Iab is output from the discard-current ON-time controller 304 to the base terminal of the second transistor Q12.

As shown in Fig. 15, image data and density-unevenness correction data are input from the signal generating circuit 100 to the discard-current amount controller 303. Three parameters, that is, calculation start transfer number A, discard-current coefficient B, and discard-current fixed value C, are input from the controller 4 to the discard-current amount controller 303. The calculation start transfer number A indicates, among the 256 light-emitting thyristors L1 through L256 of each SLED chip 67, a light-emitting thyristor L to be used for determining the amount of discard current. More specifically, to determine the amount of discard current, the calculation of image data is started from the light-emitting signal of the light-emitting thyristor L indicated by the calculation start transfer number A. For example, if the calculation start transfer number A indicates 245, it means that the number of light-emitting thyristors L through which a light-emitting signal has been transferred is 245. Thus, the calculation of image data is started from the light-emitting signal of the 246-th light-emitting thyristor L246. The discard-current coefficient B is used for determining the value of the discard current and is to be multiplied by the cumulative light-emitting time of the light-emitting signal starting from the light-emitting thyristor L indicated by the calculation start transfer number A until the final 256-th light-emitting thyristor L. The discard-current fixed value C is a predetermined fixed value of the discard current.

To further explain the above-described parameters, it is now assumed that the calculation start transfer number A is 245. In this case, if image data for the 246-th light-emitting thyristor L246 and subsequent light-emitting thyristors L is ON, correction value data for the light amount irregularities (light-emitting time of the corresponding light-emitting thyristor L) t is obtained, and the light-emitting times t from the 246-th light-emitting thyristor L246 up to the final light-emitting thyristor L256 are accumulated, as in the following expression (2). If a certain light-emitting thyristor L is OFF, the light-emitting time t of this light-emitting thyristor L is set to 0 (t=0) and is not accumulated. The light-emitting time t of a light-emitting thyristor L is an example of the light-emission ratio of the light-emitting thyristor L. If the light-emitting time t of a light-emitting thyristor L is zero, the light-emission ratio of this light-emitting thyristor L is zero. If the light-emitting time t of a light-emitting thyristor L is the maximum value, the light-emission ratio of this light-emitting thyristor L is 100.

$$\Sigma t = t246 + t247 + .... t254 + t255 \qquad (2)$$

The discard-current amount controller 303 calculates the value of the discard current Iab according to the following expression (3).

$$\mathrm{Iab} = \{(\Sigma t_1 + \Sigma t_2 + ... \Sigma t_{40})/\mathrm{tmax}) \times B + C \qquad (3)$$

The calculation start transfer number A, discard-current coefficient B, and discard-current fixed value C are set in accordance with the device type of the image forming apparatus 1 and are prestored in the EEPROM 102, which is an example of the storage. In expression (3), $\Sigma t_1$ is the cumulative value of the light-emitting times t of the SLED chip 67-1, $\Sigma t_{40}$ is the cumulative value of the light-emitting times t of the SLED chip 67-40, and tmax is the maximum value of the cumulative light-emitting times t of the SLED chips 67-1 through 67-40.

The discard-current ON/OFF switcher 302 is controlled by the discard-current ON-time controller 304 and switches between the ON/OFF timings.

Parameters, that is, ON-time coefficient D, ON-time fixed value E, ON-time correction value F, and OFF-time correction value G, are input from the controller 4 to the discard-current ON-time controller 304. To provide synchronization for the flowing timing of the discard current, a trigger signal TRG is output from the timing signal generator 114 of the signal generating circuit 100 to the discard-current ON-time controller 304. Among the above-described parameters, the ON-time coefficient D is a coefficient to be multiplied by the basic ON time of the discard current and is a value which is set in accordance with the device type of the image forming apparatus 1. The ON-time fixed value E is a predetermined fixed value of the ON time. The ON-time correction value F is a value for correcting the time for which the discard current is ON, while the OFF-time correction value G is a value for correcting the time for which the discard current is OFF.

The discard-current ON time is calculated according to the following expression (4) based on the basic ON time of the discard current.

$$\mathrm{Discard\text{-}current\ ON\ time} = (\mathrm{basic\ ON\ time} \times D) + E \qquad (4)$$

The ON/OFF timings of the discard current are calculated by the following expressions (5) and (6) in accordance with the characteristics of a circuit for a discard current, based on the time at which the final transfer period, that is, the 255-th transfer period, is completed. Basically, the ON-time correction value F is a negative value.

$$\mathrm{ON\ timing} = \mathrm{transfer\ period\ completion\ time} + F \qquad (5)$$

$$\mathrm{OFF\ timing} = \mathrm{transfer\ period\ completion\ time} + \mathrm{discard\text{-}current\ ON\ time} + G \quad (6)$$

In this manner, the ON/OFF timings that are controlled and switched by the discard-current ON-time controller 304 can be set before and after a break period, as shown in Fig. 16. To determine the ON timing of the discard current, the magnitude of the ON-time correction value F may be changed in accordance with the magnitude of the discard current Iab.

The discard-current ON-time controller 304 is able to start the flowing of the discard current before the start of a break period. The discard-current ON-time controller 304 is also able to stop the flowing of the discard current after the end of the break period.

As described above, the discard-current ON-time controller 304 can cause a certain amount of discard current to flow over the entire break period, unlike when the ON/OFF timings of the flowing of the discard current are not switched during scanning periods before and after a break period. For some reasons, such as the circuit configuration and the operation, the discard-current amount control unit 301 is not necessarily able to cause a certain amount of discard current to flow at the same time as the start of a break period. The discard-current ON-time controller 304 thus starts the flowing of the discard current before the start of a break period. This guarantees that a certain amount of discard current can flow during the break period. If the discard-current amount control unit 301 performs control to stop the flowing of the discard current at the same time as the end of the break period, the excessive drive current is not reduced. Hence, the discard-current ON-time controller 304 continues the flowing of the discard current even after the end of the break period, thereby making it possible to speedily reduce the excessive drive current.

The discard-current coefficient B and the ON-time coefficient D vary depending on the hardware of the LED circuit substrate 62, such as the electrostatic capacitance, and may thus be adjusted in accordance with the device type of the image forming apparatus 1. Even for image forming apparatuses with the same device type, the discard-current coefficient B and the ON-time coefficient D may be able to be adjusted in accordance with the conditions for using the image forming apparatus.

One of the examples in which the discard-current coefficient B and the ON-time coefficient D are adjusted in accordance with the conditions for using the image forming apparatus is as follows. In some device types of image forming apparatuses, the print speed can be adjusted in accordance with the type of recording sheet. Typically, for thick paper or coated paper, a lower print speed is set than for plain paper. In the image forming apparatus 1, as the print speed is lower, the transfer time of each SLED chip 67 becomes longer. Basically, however, the light-emitting time of the light-emitting thyristors L is unchanged.

As a result, the average consumed current in the LED print head 60 is decreased. The voltage variations of the LED circuit substrate 62 during a break period of each SLED chip 67 thus become smaller. Hence, setting a smaller discard-current amount using the discard-current amount controller 303 and setting a shorter discard-current ON time using the discard-current ON-time controller 304 can decrease the voltage variations of the LED circuit substrate 62. That is, in the image forming apparatus 1, as the print speed is lower, setting a smaller discard-current coefficient B and a smaller ON-time coefficient D is effective.

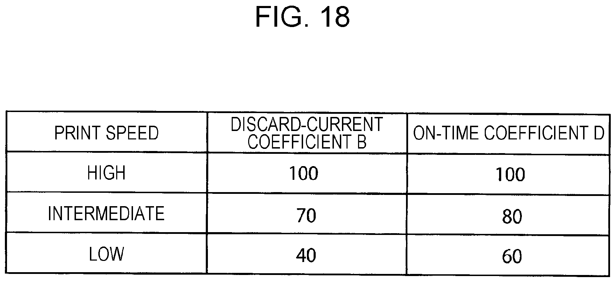

In this exemplary embodiment, as illustrated in Fig. 18, when the print speed of the image forming apparatus 1 is lowered, that is, when the scanning exposure speed of the LED print head 60 is slowed down, the discard-current coefficient B is lowered to "70" and "40", for example, and also, the ON-time coefficient D is lowered to "80" and "60", for example. The values of the discard-current coefficient B and the ON-time coefficient D corresponding to the print speeds are prestored in the EEPROM 102, as discussed above.

(Operation of Exposure Device)

With the above-described configuration, the image forming apparatus 1 utilizing the LED print head 60 of the exemplary embodiment is able to reduce the light amount irregularities caused by variations in the drive voltage, compared with an image forming apparatus without the discard-current controller that controls a discard current generated by the discard-current generator. The operation of the LED print head 60 will be discussed below.

As illustrated in Fig. 1, the image forming apparatus 1 of the exemplary embodiment receives image data and instruction information indicating a request to form (print) a full-color image from an external device, such as the image reader 5 or the PC 6. Then, the controller 4 starts the photoconductor drum 11 of each of the image forming units 10Y, 10M, 10C, and 10K and charges the surface of the photoconductor drum 11 with the charger 12. Then, the LED print head 60 of each of the image forming units 10Y, 10M, 10C, and 10K applies light, which is to be emitted based on image data of the corresponding one of the color components Y, M, C, and K, to the surface of the photoconductor drum 11.

In the LED print head 60, as shown in Fig. 10, the SLED chips 67-1 through 67-40 are driven by the signal generating circuit 100. Based on the image data, the signal generating circuit 100 controls the ON/OFF operations of the 256 light-emitting thyristors L1 through L256 of each of the SLED chips 67-1 through 67-40 and the light-emitting time in accordance with the light-emitting signals $\varphi$l1 through $\varphi$l40 flowing through the light-emitting signal lines 203-1 through 203-40.

As illustrated in Fig. 6, in the light-emitting thyristors L1 through L256 of each of the SLED chips 67-1 through 67-40, a light-emitting current first flows from the power supply circuit 101 to the Vsub terminal and further flows from the Vsub terminal to the reference potential supplier 69, which is the return power supply, in accordance with the light-emitting signal $\varphi$l flowing through the light-emitting signal line 70.

At this time, the same reference potential supplier 69 is used for the SLED chips 67-1 through 67-40. The light-emitting current supplied from the power supply circuit 101 and flowing through the light-emitting thyristors L1 through L256 of each of the SLED chips 67-1 through 67-40 is changed in accordance with the ON/OFF state of the light-emitting thyristors L1 through L256.

The LED print head 60 includes the multiple SLED chips 67-1 through 67-40. The power supply line 200 used for applying a drive voltage to the SLED chips 67-1 through 67-40 is constituted by an elongated linear conductor laid on the LED circuit substrate 62 along the axial direction of the photoconductor drum 11 and has a relatively high electrostatic capacitance via the substrate 68.

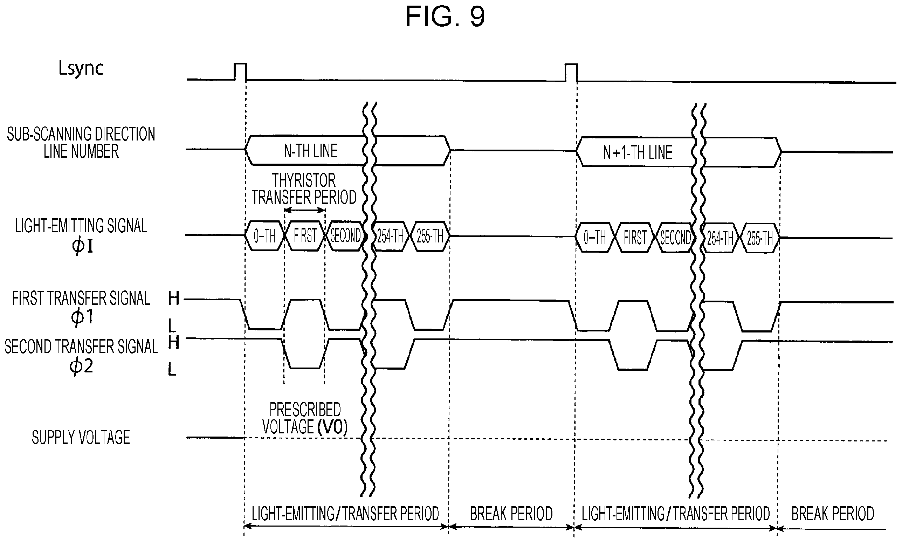

In the LED print head 60, every time one line of the photoconductor drum 11 is scanned, a break period follows, as shown in Fig. 9. In each break period, the light-emitting current flowing through the light-emitting thyristors L1 through L256 of each of the SLED chips 67-1 through 67-40 is interrupted. Additionally, the light-emitting current flowing through the light-emitting thyristors L1 through L256 is changed before and after a break period in accordance with the image data.

In the LED print head 60, unless some measures are taken, the light-emitting current flowing through the light-emitting thyristors L1 through L256 of each of the SLED chips 67-1 through 67-40 is instantaneously interrupted during a break period. However, due to the influence of the inductance resulting from the electrostatic capacitance of a light-emitting power supply path, the light-emitting current is gradually decreased. Thus, the power supply voltage of the power supply circuit 101 soars due to an overcurrent. As a result, when the next line exposure is started after the break period, the voltage of the power supply circuit 101 is still high, and then, the supply voltage sharply drops and then returns to the regular voltage. This causes the occurrence of streaky portions having a low density and those having a high density in a resulting image.

As illustrated in Fig. 10, the LED print head 60 of the exemplary embodiment includes the discard-current amount control unit 301 and the discard-current ON/OFF switcher 302 connected to the power supply line 200 of the power supply circuit 101. Additionally, in the LED print head 60 of the exemplary embodiment, the value of the discard current Iab is controlled by the discard-current amount controller 303, while the flowing timing of the discard current Iab is controlled by the discard-current ON-time controller 304, as shown in Fig. 16.

To give a further explanation, in the LED print head 60, as shown in Fig. 15, the discard-current amount controller 303 calculates the value of the discard current Iab by using expression (3) in accordance with the cumulative value of the light-emitting times of the 246-th light-emitting thyristor L246 and the subsequent light-emitting thyristors. The discard-current amount control unit 301 performs control under the control of the discard-current amount controller 303 so that the amount of discard current matches the value of the discard current Iab calculated by the discard-current amount controller 303.

The discard-current ON-time controller 304 calculates the ON timing at which the discard current starts to flow and the OFF timing at which the flowing of the discard current is interrupted. The discard-current ON/OFF switcher 302 controls the flowing timing of the discard current under the control of the discard-current ON-time controller 304.

In the LED print head 60 of the exemplary embodiment, if, immediately before a break period, the light-emitting current is relatively low, such as because a relatively small number of light-emitting thyristors L is emitting light or the light-emitting time of the light-emitting thyristors L is relatively short, the discard current is set to be a small value and the discard-current flowing time is set to be relatively short.

In the LED print head 60 of this exemplary embodiment, if, immediately before a break period, the light-emitting current is relatively high, such as because a relatively large number of light-emitting thyristors L is emitting light or the light-emitting time of the light-emitting thyristors L is relatively long, the discard current is set to be a large value and the discard-current flowing time is set to be relatively long.

Using the LED print head 60 of the exemplary embodiment makes it possible to reduce the light amount irregularities caused by the variations in the drive voltage at the start of a scanning period immediately after the end of a break period, compared with an LED print head without the discard-current controller that controls a discard current generated by the discard-current generator.

Example

The present inventor carried out an example by making a prototype of the LED print head 60 including SLED chips 67-1 through 67-40 to be driven by a signal generating circuit 100, such as that shown in Fig. 10, and by checking how much the light amount irregularities caused by variations in the drive voltage were reduced.

In this example, the difference in the power supply voltage of the power supply circuit 101 immediately after a break period between when the light-emitting time of light-emitting thyristors was maximum based on 100% image data Cin and when the light-emitting time of the light-emitting thyristors was half the maximum based on 50% image data Cin was measured.

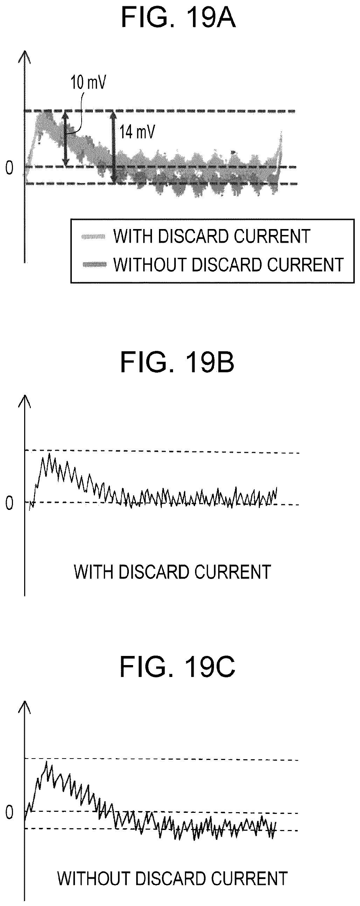

Figs. 19A, 19B, and 19C illustrate measurement results of the variations in the power supply voltage of this example.

As is seen from Fig. 19A, the variations in the power supply voltage when the value of the discard current was controlled in accordance with the ratio of the image data Cin is 10 mV, while those when the value of the discard current was fixed regardless of the ratio of the image data Cin is as high as 14 mV.

In the above-described exemplary embodiment, the disclosure is applied to a full-color image forming apparatus. The disclosure is also applicable to a monochromatic image forming apparatus.

In the above-described exemplary embodiment, the optical scanning device is used in an image forming apparatus. However, the optical scanning device may be used in devices other than an image forming apparatus.

In the above-described exemplary embodiment, the light-emitting thyristors L of each SLED chip 67 of the optical scanning device are driven by setting the anode to H (0 V) and the cathode to L (-3.3 V). However, the light-emitting thyristors may be driven by setting the anode to H (positive polarity of about +3.3 V) and the cathode to L (0 V).

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

(Appendix)

(((1))) An optical scanning device comprising:

a scanner that includes a plurality of light-emitting element sets, the plurality of light-emitting element sets being arranged in a main scanning direction so as to face a subject to be scanned and being each constituted by a plurality of light-emitting elements arranged in the main scanning direction, and that scans the subject by causing each of the plurality of light-**emitting** element sets to emit light based on image information;

a driver that drives each of the plurality of light-emitting element sets for each scanning period; and

a discard-current generator that generates a discard current which is to flow from the driver during a non-scanning period which is set between the scanning periods, the discard current being different from a current to flow to each of the plurality of light-emitting element sets, and that also controls the generated discard current.

(((2))) The optical scanning device according to (((1))), wherein the discard-current generator includes a switcher that performs a switching operation to selectively cause the discard-current generator to generate the discard current or not to generate the discard current.

(((3))) The optical scanning device according to (((2))), wherein the switcher performs the switching operation for the discard-current generator during the scanning periods positioned before and after the non-scanning period.

(((4))) The optical scanning device according to (((3))), wherein the switcher changes a timing at which the switching operation for the discard-current generator is performed, in accordance with the image information used for scanning the subject in the scanning period immediately before the non-scanning period.

(((5))) The optical scanning device according to (((4))), wherein the image information includes at least one of information on a light amount of the plurality of light-emitting elements of each of the plurality of light-emitting element sets and information on a light-emission ratio of the plurality of light-emitting elements of each of the plurality of light-emitting element sets.

(((6))) The optical scanning device according to (((5))), wherein the switcher calculates a flowing time of the discard current by multiplying a basic ON time of the discard current by a certain coefficient.

(((7))) The optical scanning device according to (((1))), wherein the discard-current generator includes a setter that sets a value of the discard current.

(((8))) The optical scanning device according to (((7))), wherein the setter sets the value of the discard current in accordance with the image information used for scanning the subject in the scanning period immediately before the non-scanning period.

(((9))) The optical scanning device according to (((8))), wherein the image information includes at least one of information on a light amount of the plurality of light-emitting elements of each of the plurality of light-emitting element sets and information on a light-emission ratio of the plurality of light-emitting elements of each of the plurality of light-emitting element sets.

(((10))) The optical scanning device according to (((9))), wherein the setter changes the value of the discard current in accordance with a cumulative value of at least one of the light amount and the light-emission ratio of the plurality of light-emitting elements of each of the plurality of light-emitting element sets.

(((11))) An image forming apparatus comprising:

an image carrier; and

an exposure device that exposes the image carrier to light based on image information,

wherein the optical scanning device according to one of (((1))) to (((10))) is used as the exposure device.

According to the optical scanning device of (((1))), the light amount irregularities caused by variations in a drive voltage can be reduced, compared with the configuration in which a discard-current generator that generates a discard current and also controls the discard current is not provided.

According to the optical scanning device of (((2))), it is possible to handle a delay for the flowing timing of a discard current, compared with the configuration in which the discard-current generator does not include a switcher that performs a switching operation to selectively cause the discard-current generator to generate the discard current or not to generate the discard current.

According to the optical scanning device of (((3))), a certain amount of discard current can flow during the entire non-scanning period, compared with the configuration in which the switcher does not perform the switching operation during scanning periods positioned before and after a non-scanning period.

According to the optical scanning device of (((4))), the influence of variations in the drive voltage can further be reduced, compared with the configuration in which the switcher does not change the timing at which the switching operation is performed in accordance with the image information used for scanning the subject in the scanning period immediately before the non-scanning period.

According to the optical scanning device of (((5))), the influence of variations in the drive voltage caused by image information can further be reduced, compared with the configuration in which the image information includes neither of information on the light amount of the light-emitting elements of each of the light-emitting element sets nor information on the light-emission ratio of the light-emitting elements of each of the light-emitting element sets.

According to the optical scanning device of (((6))), the influence of variations in the drive voltage caused by image information can further be reduced, compared with the configuration in which the switcher sets a fixed timing at which the switching operation is performed.

According to the optical scanning device of (((7))), variations in the drive voltage can reliably be reduced, compared with the configuration in which the discard-current generator sets a fixed value of the discard current.

According to the optical scanning device of (((8))), the influence of variations in the drive voltage caused by image information can further be reduced, compared with the configuration in which the setter sets a fixed value of the discard current regardless of the content of the image information in the scanning period immediately before the non-scanning period.

According to the optical scanning device of (((9))), the influence of variations in the drive voltage caused by image information can further be reduced, compared with the configuration in which the image information includes neither of information on the light amount of the light-emitting elements of each of the light-emitting element sets nor information on the light-emission ratio of the light-emitting elements of each of the light-emitting element sets.

According to the optical scanning device of (((10))), the influence of variations in the drive voltage caused by image information can further be reduced, compared with the configuration in which the setter sets a fixed value of the discard current regardless of the value of the light amount or the light-emission ratio of the light-emitting elements of each of the light-emitting element sets.

According to the image forming apparatus of (((11))), the light amount irregularities caused by variations in a drive voltage can be reduced, compared with the configuration in which a discard-current generator that generates a discard current and also controls the discard current is not provided.

## Claims

1.  An optical scanning device comprising:

    a scanner that includes a plurality of light-emitting element sets, the plurality of light-emitting element sets being arranged in a main scanning direction so as to face a subject to be scanned and being each constituted by a plurality of light-emitting elements arranged in the main scanning direction, and that scans the subject by causing each of the plurality of light-emitting element sets to emit light based on image information;
    a driver that drives each of the plurality of light-emitting element sets for each scanning period; and
    a discard-current generator that generates a discard current which is to flow from the driver during a non-scanning period which is set between the scanning periods, the discard current being different from a current to flow to each of the plurality of light-emitting element sets, and that also controls the generated discard current.

2.  The optical scanning device according to claim 1, wherein the discard-current generator includes a switcher that performs a switching operation to selectively cause the discard-current generator to generate the discard current or not to generate the discard current.

3.  The optical scanning device according to claim 2, wherein the switcher performs the switching operation for the discard-current generator during the scanning periods positioned before and after the non-scanning period.

4.  The optical scanning device according to claim 3, wherein the switcher changes a timing at which the switching operation for the discard-current generator is performed, in accordance with the image information used for scanning the subject in the scanning period immediately before the non-scanning period.

5.  The optical scanning device according to claim 4, wherein the image information includes at least one of information on a light amount of the plurality of light-emitting elements of each of the plurality of light-emitting element sets and information on a light-emission ratio of the plurality of light-emitting elements of each of the plurality of light-emitting element sets.

6.  The optical scanning device according to claim 5, wherein the switcher calculates a flowing time of the discard current by multiplying a basic ON time of the discard current by a certain coefficient.

7.  The optical scanning device according to claim 1, wherein the discard-current generator includes a setter that sets a value of the discard current.

8. The optical scanning device according to claim 7, wherein the setter sets the value of the discard current in accordance with the image information used for scanning the subject in the scanning period immediately before the non-scanning period.

9. The optical scanning device according to claim 8, wherein the image information includes at least one of information on a light amount of the plurality of light-emitting elements of each of the plurality of light-emitting element sets and information on a light-emission ratio of the plurality of light-emitting elements of each of the plurality of light-emitting element sets.

10. The optical scanning device according to claim 9, wherein the setter changes the value of the discard current in accordance with a cumulative value of at least one of the light amount and the light-emission ratio of the plurality of light-emitting elements of each of the plurality of light-emitting element sets.

11. An image forming apparatus comprising:

an image carrier; and
an exposure device that exposes the image carrier to light based on image information,
wherein the optical scanning device according to one of claims 1 to 10 is used as the exposure device.

**Amended claims in accordance with Rule 137(2) EPC.**

1. An optical scanning device (13) comprising:

a scanner that includes a plurality of light-emitting element sets (63), the plurality of light-emitting element sets being arranged in a main scanning direction so as to face a subject to be scanned and being each constituted by a plurality of light-emitting elements arranged in the main scanning direction, and that scans the subject by causing each of the plurality of light-emitting element sets to emit light based on image information;
a driver (100) that drives each of the plurality of light-emitting element sets for each scanning period; and
a discard-current generator that generates a discard current (Iab) which is to flow from the driver during a non-scanning period which is set between the scanning periods, the discard current being different from a current to flow to each of the plurality of light-emitting element sets, and that also controls the generated discard current, **characterised in that**: the discard-current generator includes a setter that sets a value of the discard current.

2. The optical scanning device according to claim 1, wherein the discard-current generator includes a switcher (302) that performs a switching operation to selectively cause the discard-current generator to generate the discard current or not to generate the discard current.

3. The optical scanning device according to claim 2, wherein the switcher performs the switching operation for the discard-current generator during the scanning periods positioned before and after the non-scanning period.

4. The optical scanning device according to claim 3, wherein the switcher changes a timing at which the switching operation for the discard-current generator is performed, in accordance with the image information used for scanning the subject in the scanning period immediately before the non-scanning period.

5. The optical scanning device according to claim 4, wherein the image information includes at least one of information on a light amount of the plurality of light-emitting elements of each of the plurality of light-emitting element sets and information on a light-emission ratio of the plurality of light-emitting elements of each of the plurality of light-emitting element sets.

6. The optical scanning device according to claim 5, wherein the switcher calculates a flowing time of the discard current by multiplying a basic ON time of the discard current by a certain coefficient.

7. The optical scanning device according to claim 1, wherein the setter sets the value of the discard current in accordance with the image information used for scanning the subject in the scanning period immediately before the non-scanning period.

8. The optical scanning device according to claim 7, wherein the image information includes at least one of information on a light amount of the plurality of light-emitting elements of each of the plurality of light-emitting element sets and information on a light-emission ratio of the plurality of light-emitting elements of each of the plurality of light-emitting element sets.

9. The optical scanning device according to claim 8, wherein the setter changes the value of the discard current in accordance with a cumulative value of at least one of the light amount and the light-emission ratio of the plurality of light-emitting elements of each of the plurality of light-emitting element sets.

10. An image forming apparatus comprising:

an image carrier (11); and
an exposure device (13) that exposes the image carrier to light based on image information,
wherein the optical scanning device according to one of claims 1 to 9 is used as the exposure device.

FIG. 1

EP 4 718 832 A1

# FIG. 2

13, 60

61

62

63, 65

64

11

A

EP 4 718 832 A1

## FIG. 3

FIG. 4

# FIG. 5A

# FIG. 5B

# FIG. 6

EP 4 718 832 A1

# FIG. 7

FIG. 8

## FIG. 9

Lsync

SUB-SCANNING DIRECTION
LINE NUMBER          N-TH LINE                    N+1-TH LINE

THYRISTOR
TRANSFER PERIOD

LIGHT-EMITTING SIGNAL
$\phi I$          0-TH   FIRST  SECOND   254-TH  255-TH        0-TH   FIRST  SECOND   254-TH  255-TH

FIRST TRANSFER SIGNAL   H
$\phi 1$          L
SECOND TRANSFER SIGNAL  H
$\phi 2$          L

PRESCRIBED
VOLTAGE (V0)

SUPPLY VOLTAGE

LIGHT-EMITTING/TRANSFER PERIOD   BREAK PERIOD   LIGHT-EMITTING/TRANSFER PERIOD   BREAK PERIOD

EP 4 718 832 A1

# FIG. 10

FIG. 11A

FIG. 11B

EP 4 718 832 A1

## FIG. 12A

## FIG. 12B

## FIG. 13A
## RELATED ART

n-TH LINE

n + 1-TH LINE

n + 2-TH LINE

n + i-TH LINE

PERIOD A: STREAKY PORTIONS WITH DENSITY UNEVENNESS
OCCUR DUE TO VOLTAGE VARIATIONS AT THE START OF
WRITE PERIOD IMMEDIATELY AFTER NON-WRITE PERIOD.

## FIG. 13B
## RELATED ART

ONE SCANNING LINE PERIOD | ONE SCANNING LINE PERIOD

LIGHT-EMITTING TIME    BREAK TIME    LIGHT-EMITTING TIME    BREAK TIME

# FIG. 14
# RELATED ART

DENSITY UNEVENNESS IN HALFTONE IMAGE

# FIG. 15

# FIG. 16

# FIG. 17

# FIG. 18

EP 4 718 832 A1

| PRINT SPEED | DISCARD-CURRENT COEFFICIENT B | ON-TIME COEFFICIENT D |
|---|---|---|
| HIGH | 100 | 100 |
| INTERMEDIATE | 70 | 80 |
| LOW | 40 | 60 |

## FIG. 19A

10 mV

14 mV

0

```
═══ WITH DISCARD CURRENT
═══ WITHOUT DISCARD CURRENT
```

## FIG. 19B

0

WITH DISCARD CURRENT

## FIG. 19C

0

WITHOUT DISCARD CURRENT

| | Europäisches Patentamt European Patent Office Office européen des brevets | **EUROPEAN SEARCH REPORT** | **Application Number** EP 25 16 1042 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/324826 A1 (AKAGI DAISUKE [JP]) 12 October 2023 (2023-10-12) | 1-3,11 | INV. H04N1/19 G03G15/043 |
| A | * abstract; figure all * * paragraphs [0033], [0034], [0055], [0155] * | 4-10 | G03G15/00 |
| A | ----- US 7 954 917 B2 (FUJI XEROX CO LTD [JP]) 7 June 2011 (2011-06-07) * the whole document * ----- | 1-11 | |

| | TECHNICAL FIELDS SEARCHED (IPC) |
|---|---|
| | H04N G03G |

The present search report has been drawn up for all claims

| Place of search | Date of completion of the search | Examiner |
|---|---|---|
| The Hague | 30 June 2025 | Winne, Dominique |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 1042

This annex lists the patent family members relating to the patent documents cited in the above-mentioned European search report.
The members are as contained in the European Patent Office EDP file on
The European Patent Office is in no way liable for these particulars which are merely given for the purpose of information.

30-06-2025

| Patent document cited in search report | | | Publication date | Patent family member(s) | | | Publication date |
|---|---|---|---|---|---|---|---|
| US 2023324826 | A1 | | 12-10-2023 | CN | 116685472 | A | 01-09-2023 |
| | | | | EP | 4265427 | A1 | 25-10-2023 |
| | | | | JP | 7695073 | B2 | 18-06-2025 |
| | | | | JP | 2022096967 | A | 30-06-2022 |
| | | | | US | 2023324826 | A1 | 12-10-2023 |
| | | | | WO | 2022130695 | A1 | 23-06-2022 |
| US 7954917 | B2 | | 07-06-2011 | CN | 101154073 | A | 02-04-2008 |
| | | | | JP | 5200360 | B2 | 05-06-2013 |
| | | | | JP | 2008087291 | A | 17-04-2008 |
| | | | | KR | 20080030442 | A | 04-04-2008 |
| | | | | US | 2008079025 | A1 | 03-04-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015074195 A
- JP 2013052650 A
- JP 2003182141 A
- JP 2008093896 A